# EUROPEAN PATENT APPLICATION

(11) **EP 4 841 907 A1**
(43) Date of publication of application: **18.11.2026**
(21) Application number: 25739103.7
(22) Date of filing: 09.01.2025
(51) Int. Cl.: H04B 7/06, H04W 24/08, H04W 52/14, H04W 52/32, H04W 72/21, H04W 72/56, H04B 17/318, H04B 17/336, H04L 1/1812

(54) **METHOD AND DEVICE FOR UE-INITIATED CHANNEL STATE INFORMATION REPORTING IN WIRELESS COMMUNICATION SYSTEM**

(30) Priority: 09.01.2024 US 202463619278 P
(71) Applicant: LG Electronics Inc., Yeongdeungpo-gu Seoul 07336 (KR)
(72) Inventor: KIM, Hyungtae, Seoul 06772 (KR); KANG, Jiwon, Seoul 06772 (KR); KIM, Seonwook, Seoul 06772 (KR); PARK, Haewook, Seoul 06772 (KR)
(74) Representative: Mooser, Sebastian Thomas
(86) International application number: PCT/KR2025/000532
(87) International publication number: WO 2025/150938

(57) **Abstract**

A method and a device for reporting channel state information (CSI) initiated by a UE in a wireless communication system are disclosed. A method according to an embodiment of the present disclosure may include receiving, from a network by a UE, a configuration related to channel state information (CSI) report; and transmitting, to the network by the UE, at least one uplink channel based on a priority for a first uplink channel including a first UE-initiated (UEI) CSI report and a priority for at least one second uplink channel. The priority for the first uplink channel including the first UEI CSI report may be based on at least one of event-related information, a priority index, or power allocation order.

## Description

### [Technical Field]

The present disclosure relates to a wireless communication system, and more specifically, relates to a method and a device for reporting channel state information (CSI) initiated by a UE in a wireless communication system.

### [Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

### [Disclosure]

### [Technical Problem]

The technical problem of the present disclosure is to provide a UE-initiated CSI report method and device in a wireless communication system.

The additional technical problem of the present disclosure is to provide a method and a device based on a priority for UE-initiated CSI report in a wireless communication system.

The technical objects to be achieved by the present disclosure are not limited to the above-described technical objects, and other technical objects which are not described herein will be clearly understood by those skilled in the pertinent art from the following description.

### [Technical Solution]

A method according to an embodiment of the present disclosure may include receiving, from a network by a UE, a configuration related to channel state information (CSI) report; and transmitting, to the network by the UE, at least one uplink channel based on a priority for a first uplink channel including a first UE-initiated (UEI) CSI report and a priority for at least one second uplink channel. The priority for the first uplink channel including the first UEI CSI report may be based on at least one of event-related information, a priority index, or power allocation order.

A method according to an additional embodiment of the present disclosure may include transmitting, to a UE by a base station, a configuration related to channel state information (CSI) report; and receiving, from the UE by the base station, at least one uplink channel based on a priority for a first uplink channel including a first UE-initiated (UEI) CSI report and a priority for at least one second uplink channel. The priority for the first uplink channel including the first UEI CSI report may be based on at least one of event-related information, a priority index, or power allocation order.

### [Technical Effects]

According to the present disclosure, a UE-initiated CSI report method and device in a wireless communication system may be provided.

According to the present disclosure, a method and a device based on a priority for UE-initiated CSI report in a wireless communication system may be provided.

Effects achievable by the present disclosure are not limited to the above-described effects, and other effects which are not described herein may be clearly understood by those skilled in the pertinent art from the following description.

### [Brief Description of Diagrams]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram illustrating a downlink beam management operation in a wireless communication system to which the present disclosure may be applied.
FIG. 8 is a diagram illustrating a downlink beam management procedure using SSB in a wireless communication system to which the present disclosure may be applied.
FIG. 9 is a diagram illustrating a downlink beam management operation using CSI-RS in a wireless communication system to which the present disclosure may be applied.
FIG. 10 is a diagram illustrating a process for determining a reception beam of a terminal in a wireless communication system to which the present disclosure may be applied.
FIG. 11 is a diagram illustrating a transmission beam determination process of a base station in a wireless communication system to which the present disclosure may be applied.
FIG. 12 is a diagram illustrating resource allocation in time and frequency domains related to the operation of downlink beam management in a wireless communication system to which the present disclosure may be applied.
FIG. 13 is a diagram illustrating an uplink beam management operation using SRS in a wireless communication system to which the present disclosure may be applied.
FIG. 14 is a diagram illustrating an uplink beam management procedure in a wireless communication system to which the present disclosure may be applied.
FIG. 15 is a diagram for describing an example of a method performed by a UE according to the present disclosure.
FIG. 16 is a diagram for describing an example of a method performed by a base station according to the present disclosure.
FIG. 17 is a diagram illustrating a block diagram of a wireless communication device according to an embodiment of the present disclosure.

### [Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

### BM: beam management

CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

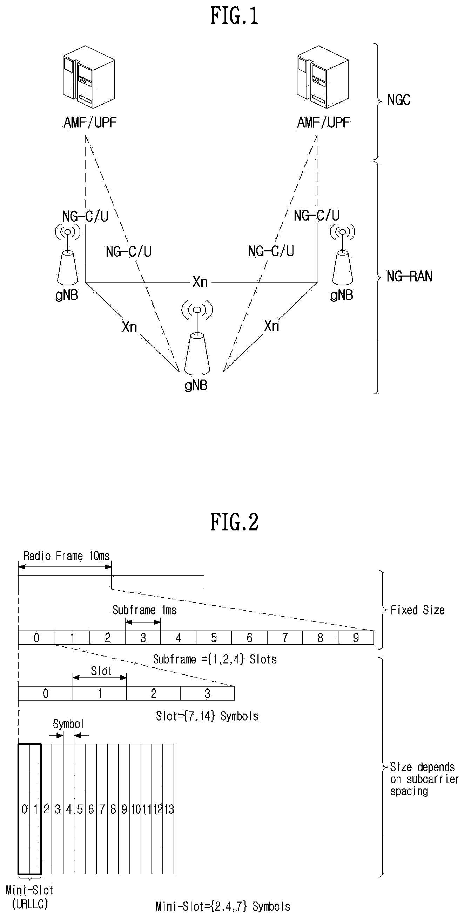

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, µ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

**[Table 1]**

| µ | Δf=2^{µ}·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of T_{c}=1/(Δfₘₐₓ·N_{f}). Here, Δfₘₐₓ is 480·10³ Hz and N_{f} is 4096. Downlink and uplink transmission is configured (organized) with a radio frame having a duration of T_{f}=1/(ΔfₘₐₓN_{f}/100)·T_{c}=10ms. Here, a radio frame is configured with 10 subframes having a duration of T_{sf}=(ΔfₘₐₓN_{f}/1000)·T_{c}=1ms, respectively. In this case, there may be one set of frames for an uplink and one set of frames for a downlink. In addition, transmission in an uplink frame No. i from a terminal should start earlier by T_{TA}=(N_{TA}+N_{TA,offset})T_{c} than a corresponding downlink frame in a corresponding terminal starts. For a subcarrier spacing configuration µ, slots are numbered in an increasing order of nₛ^{µ}∈{0,..., Nₛₗₒₜ^{subframe,µ}-1} in a subframe and are numbered in an increasing order of n_{s,f}^{µ}∈{0,..., Nₛₗₒₜ^{frame,µ}-1} in a radio frame. One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that all OFDM symbols of a downlink slot or an uplink slot may not be used.

Table 3 represents the number of OFDM symbols per slot (N_{symb}^{slot}), the number of slots per radio frame (Nₛₗₒₜ^{frame,µ}) and the number of slots per subframe (Nₛₗₒₜ^{subframe,µ}) in a normal CP and Table 4 represents the number of OFDM symbols per slot, the number of slots per radio frame and the number of slots per subframe in an extended CP.

**[Table 3]**

| µ | N_{symb}^{slot} | Nₛₗₒₜ^{frame,µ} | Nₛₗₒₜ^{subframe,µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame,µ} | Nₛₗₒₜ^{subframe,µ} |
|---|---|---|---|
| 2 | 12 | 40 | 4 |

FIG. 2 is an example on µ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

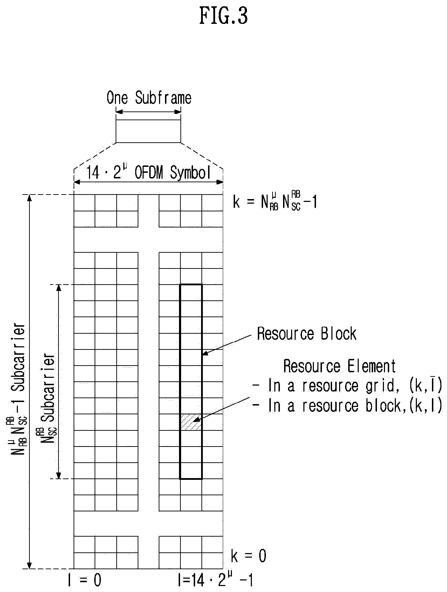

FIG. 3 illustrates a resource grid in a wireless communication system to which the present disclosure may be applied.

In reference to FIG. 3, it is illustratively described that a resource grid is configured with N_{RB}^{µ}N_{sc}^{RB} subcarriers in a frequency domain and one subframe is configured with 14·2^{µ} OFDM symbols, but it is not limited thereto. In an NR system, a transmitted signal is described by OFDM symbols of 2^{µ}N_{symb}^{(µ)} and one or more resource grids configured with N_{RB}^{µ}N_{sc}^{RB} subcarriers. Here, N_{RB}^{µ}≤N_{RB}^{max,µ}. The N_{RB}^{max,µ} represents a maximum transmission bandwidth, which may be different between an uplink and a downlink as well as between numerologies.

In this case, one resource grid may be configured per µ and antenna port p. Each element of a resource grid for µ and an antenna port p is referred to as a resource element and is uniquely identified by an index pair (k,l'). Here, k=0,...,N_{RB}^{µ}N_{sc}^{RB}-1 is an index in a frequency domain and l'=0,...,2^{µ}N_{symb}^{(µ)}-1 refers to a position of a symbol in a subframe. When referring to a resource element in a slot, an index pair (k,l) is used. Here, l=0,...,N_{symb}^{µ}-1. A resource element (k,l') for µ and an antenna port p corresponds to a complex value, a_{k,l'}^{(p,µ)}. When there is no risk of confusion or when a specific antenna port or numerology is not specified, indexes p and µ may be dropped, whereupon a complex value may be a_{k,l'}^{(p)} or a_{k,l'}. In addition, a resource block (RB) is defined as N_{sc}^{RB}=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number). Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k,l) for a subcarrier spacing configuration µ in a frequency domain is given as in the following Equation 1. [Equation 1] ${n}_{CRB}^{μ} = \left⌊\frac{k}{{N}_{sc}^{RB}}\right⌋$

In Equation 1, k is defined relatively to point A so that k=0 corresponds to a subcarrier centering in point A. Physical resource blocks are numbered from 0 to N_{BWP,i}^{size,µ}-1 in a bandwidth part (BWP) and i is a number of a BWP. A relationship between a physical resource block n_{PRB} and a common resource block n_{CRB} in BWP i is given by the following Equation 2. [Equation 2] ${n}_{CRB}^{μ} = {n}_{PRB}^{μ} + {N}_{BWP , i}^{start , μ}$

N_{BWP,i}^{start,µ} is a common resource block that a BWP starts relatively to common resource block 0.

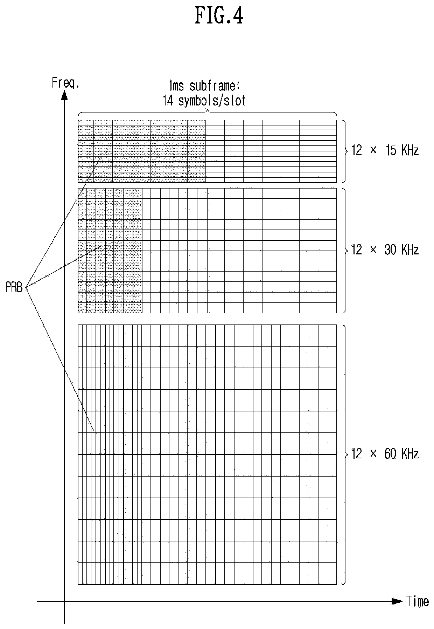

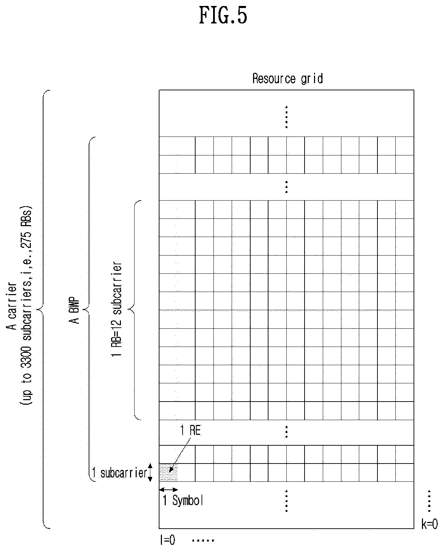

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP.

But, a configuration on a DL/UL BWP may not be received when a terminal performs an initial access procedure or before a RRC connection is set up, so a DL/UL BWP which is assumed by a terminal under these situations is defined as an initial active DL/UL BWP.

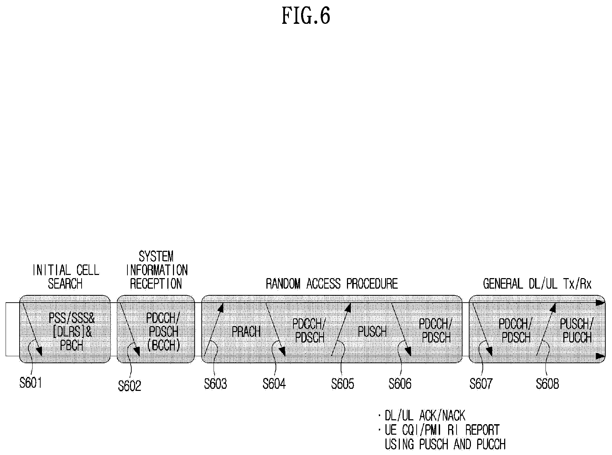

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### beam management (BM)

A BM procedure is L1(layer 1)/L2(layer 2) procedures to obtain and maintain a set of beams of a base station (e.g., a gNB, a TRP, etc.) and/or terminal (e.g., a UE) beams which may be used for downlink(DL) and uplink(UL) transmission/reception, it may include the following procedures and terms.

Beam measurement: An operation that a base station or a UE measures a property of a received beamformed signal

Beam determination: An operation that a base station or a UE selects its Tx beam / Rx beam

Beam sweeping: An operation that a spatial region is covered by using a Tx and/or Rx beam for a certain time interval in a pre-determined method

Beam report: An operation that a UE reports information of a beamformed signal based on beam measurement

A BM procedure may be classified into (1) a DL BM procedure using a SS(synchronization signal)/PBCH(physical broadcast channel) Block or a CSI-RS and (2) an UL BM procedure using an SRS(sounding reference signal).

In addition, each BM procedure may include Tx beam sweeping for determining a Tx Beam and Rx beam sweeping for determining a Rx beam.

Hereinafter, a DL BM procedure will be described.

A DL BM procedure may include (1) transmission of beamformed DL RSs (reference signals) of a base station (e.g., a CSI-RS or a SS Block(SSB)) and (2) beam reporting of a terminal.

Here, beam reporting may include preferred DL RS ID(identifier)(s) and corresponding L1-RSRP(Reference Signal Received Power).

The DL RS ID may be a SSBRI(SSB Resource Indicator) or a CRI(CSI-RS Resource Indicator).

Hereinafter, a DL BM procedure using an SSB will be described.

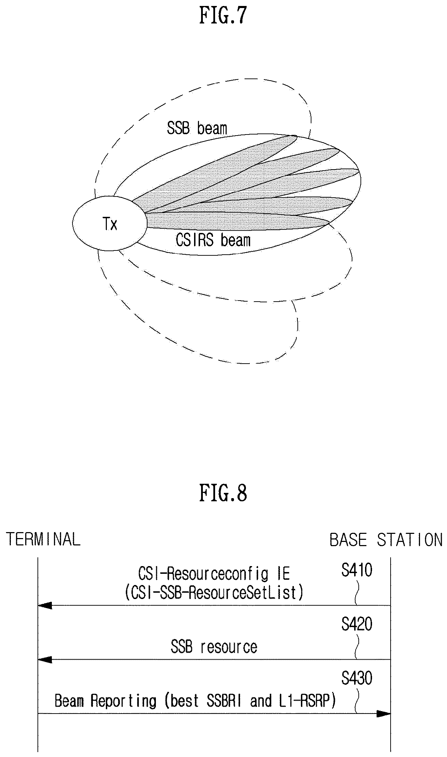

FIG. 7 is a diagram which illustrates a downlink beam management operation in a wireless communication system to which the present disclosure may be applied.

In reference to FIG. 7, an SSB beam and a CSI-RS beam may be used for beam measurement. A measurement metric is L1-RSRP per resource/block. An SSB may be used for coarse beam measurement and a CSI-RS may be used for fine beam measurement. An SSB may be used for both of Tx beam sweeping and Rx beam sweeping.

Rx beam sweeping using an SSB may be performed while an UE changes an Rx beam for the same SSBRI across a plurality of SSB bursts. In this case, one SS burst includes one or more SSBs and one SS burst set includes one or more SSB bursts.

FIG. 8 is a diagram which illustrates a downlink beam management procedure using SSB in a wireless communication system to which the present disclosure may be applied.

A configuration on a beam report using an SSB is performed in a CSI/beam configuration in a RRC connected state (or a RRC connected mode).

In reference to FIG. 8, a terminal receives CSI-ResourceConfig IE including CSI-SSB-ResourceSetList including SSB resources used for BM from a base station (S410).

Table 6 represents an example of CSI-ResourceConfig IE and as in Table 6, a BM configuration using an SSB configures an SSB like a CSI-RS resource without being separately defined.

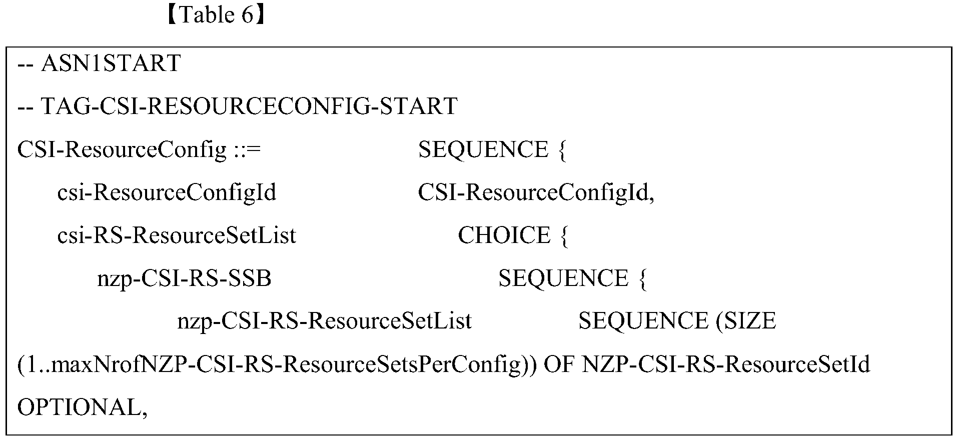

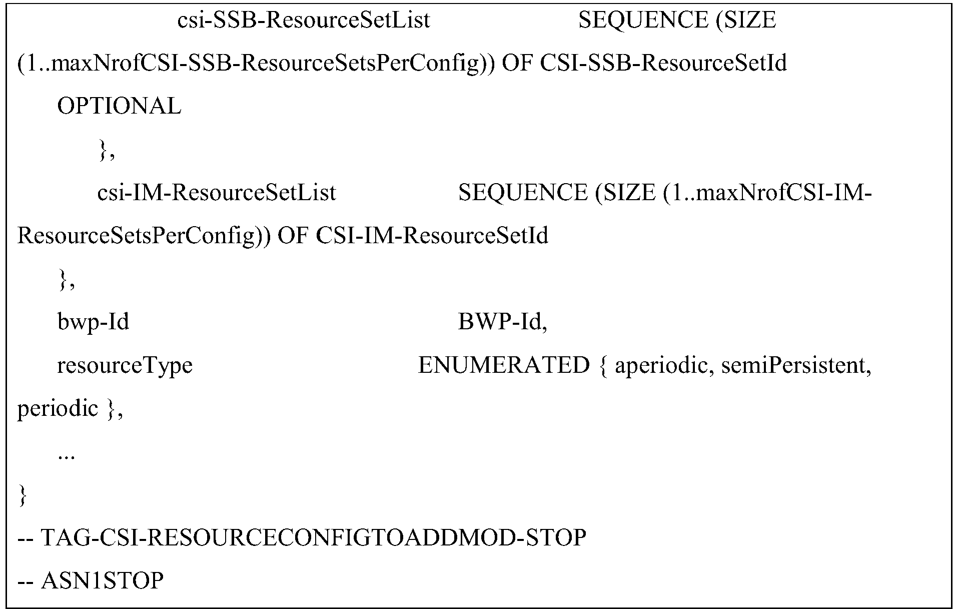

In Table 6, a csi-SSB-ResourceSetList parameter represents a list of SSB resources used for beam management and reporting in one resource set. Here, an SSB resource set may be configured as {SSBx1, SSBx2, SSBx3, SSBx4, ...}. An SSB index may be defined from 0 to 63. A terminal receives an SSB resource from the base station based on the CSI-SSB-ResourceSetList (S420).

When CSI-RS reportConfig related to a report on a SSBRI and L1-RSRP is configured, the terminal performs (beam) reporting of the best SSBRI and corresponding L1-RSRP to a base station (S430).

Hereinafter, a DL BM procedure using a CSI-RS will be described.

Describing a usage of a CSI-RS, i) a repetition parameter is configured for a specific CSI-RS resource set and when TRS_info is not configured, a CSI-RS is used for beam management. ii) when a repetition parameter is not configured and TRS_info is configured, a CSI-RS is used for a TRS(tracking reference signal). iii) when a repetition parameter is not configured and TRS_info is not configured, a CSI-RS is used for CSI acquisition.

Such a repetition parameter may be configured only for CSI-RS resource sets associated with CSI-ReportConfig having a report of L1 RSRP or 'No Report(or None)'.

If a terminal is configured with CSI-ReportConfig in which reportQuantity is configured as 'cri-RSRP' or 'none' and CSI-ResourceConfig for channel measurement (a higher layer parameter resourcesForChannelMeasurement) does not include a higher layer parameter 'trs-Info' and includes NZP-CSI-RS-ResourceSet in which a higher layer parameter 'repetition' is configured, the terminal may be configured only with a same number of port (1-port or 2-port) having a higher layer parameter 'nrofPorts' for all CSI-RS resources in NZP-CSI-RS-ResourceSet.

When (a higher layer parameter) repetition is configured as 'ON', it is related to a Rx beam sweeping procedure of a terminal. In this case, when a terminal is configured with NZP-CSI-RS-ResourceSet, the terminal may assume that at least one CSI-RS resource in NZP-CSI-RS-ResourceSet is transmitted with the same downlink spatial domain transmission filter. In other words, at least one CSI-RS resource in NZP-CSI-RS-ResourceSet is transmitted through the same Tx beam. Here, at least one CSI-RS resource in NZP-CSI-RS-ResourceSet may be transmitted in a different OFDM symbol. In addition, a terminal does not expect to receive a different periodicity in periodicityAndOffset in all CSI-RS resources in NZP-CSI-RS-Resourceset.

Meanwhile, when repetition is configured as 'OFF', it is related to a Tx beam sweeping procedure of a base station. In this case, when repetition is configured as 'OFF', a terminal does not assume that at least one CSI-RS resource in NZP-CSI-RS-ResourceSet is transmitted in the same downlink spatial domain transmission filter. In other words, at least one CSI-RS resource in NZP-CSI-RS-ResourceSet is transmitted through a different Tx beam.

In other words, when reportQuantity of the CSI-RS reportConfig IE is configured as 'ssb-Index-RSRP', a terminal reports the best SSBRI and corresponding L1-RSRP to a base station.

In addition, when a CSI-RS resource may be configured in the same OFDM symbol(s) as an SSB(SS/PBCH Block) and 'QCL-TypeD' is applicable, the terminal may assume that a CSI-RS and an SSB are quasi co-located with regard to 'QCL-TypeD'.

Here, the QCL TypeD may mean that antenna ports are quasi-colocated with regard to a spatial Rx parameter. When a terminal receives a plurality of DL antenna ports in a QCL Type D relationship, it is allowed to apply the same Rx beam. In addition, a terminal does not expect that a CSI-RS will be configured in a RE overlapped with a RE of an SSB.

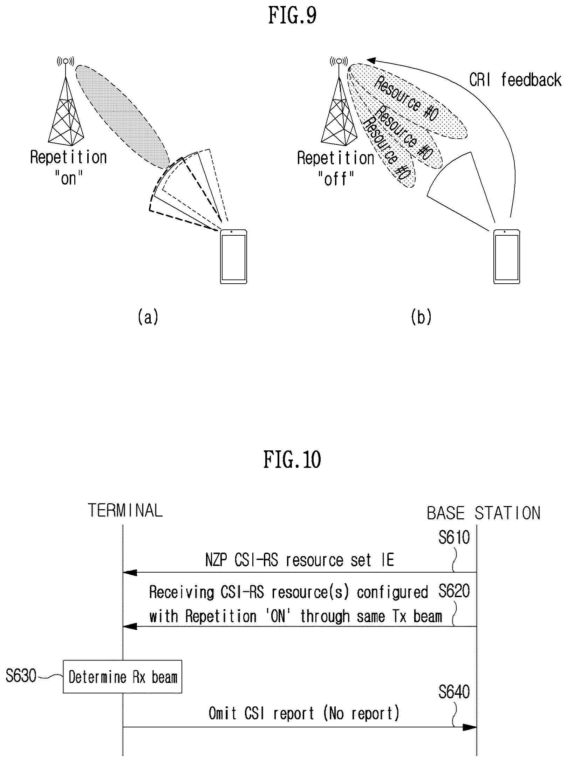

FIG. 9 is a diagram which illustrates a downlink beam management operation using CSI-RS in a wireless communication system to which the present disclosure may be applied.

FIG. 9(a) represents a Rx beam determination (or refinement) procedure of a terminal and FIG. 9(b) represents a Tx beam sweeping procedure of a base station. In addition, FIG. 9(a) is a case when a repetition parameter is configured as 'ON' and FIG. 9(b) is a case when a repetition parameter is configured as 'OFF'.

FIG. 10 is a diagram which illustrates an Rx beam determination process of a terminal in a wireless communication system to which the present disclosure may be applied.

In reference to FIG. 9(a) and FIG. 10, an Rx beam determination process of a terminal is described.

A terminal receives NZP CSI-RS resource set IE including a higher layer parameter repetition through RRC signaling from a base station (S610). Here, the repetition parameter is configured as 'ON'.

A terminal repetitively receives resources in a CSI-RS resource set configured as repetition 'ON' through the same Tx beam (or DL spatial domain transmission filter) of a base station in a different OFDM symbol (S620).

A terminal determines its Rx beam (S630).

A terminal omits a CSI report (S640). In this case, reportQuantity of a CSI report configuration may be configured as 'No report (or None)'.

In other words, the terminal may omit a CSI report when it is configured as repetition 'ON'.

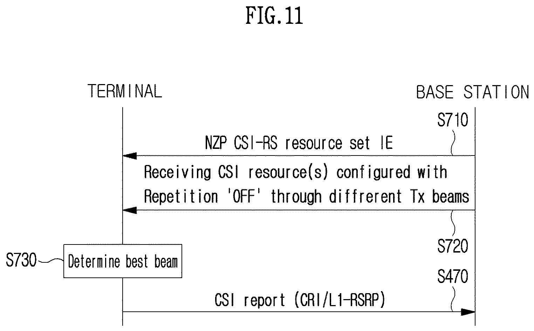

FIG. 11 is a diagram which illustrates a Tx beam determination process of a base station in a wireless communication system to which the present disclosure may be applied.

In reference to FIG. 9(b) and FIG. 11, a Tx beam determination process of a base station is described.

A terminal receives NZP CSI-RS resource set IE including a higher layer parameter repetition through RRC signaling from a base station (S710). Here, the repetition parameter is configured as 'OFF' and it is related to a Tx beam sweeping procedure of a base station.

A terminal receives resources in a CSI-RS resource set configured as repetition 'OFF' through a different Tx beam (or DL spatial domain transmission filter) of a base station (S720).

A terminal selects (or determines) the best beam (S740).

A terminal reports an ID and related quality information (e.g., L1-RSRP) of a selected beam to a base station (S740). In this case, reportQuantity of a CSI report configuration may be configured as 'CRI + L1-RSRP'.

In other words, when a CSI-RS is transmitted for BM, the terminal reports a CRI and a related L1-RSRP.

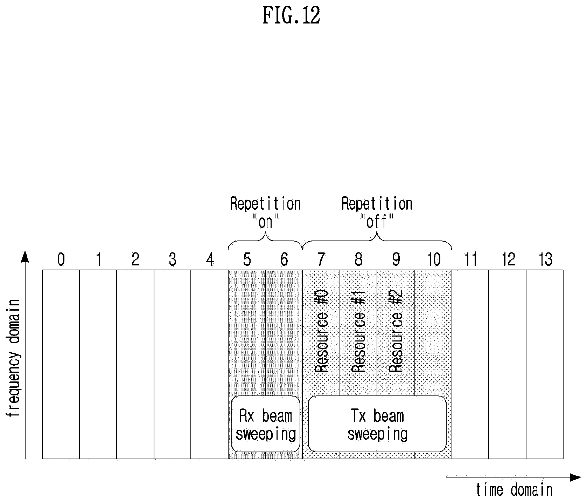

FIG. 12 is a diagram which illustrates resource allocation in a time and frequency domain related to a downlink beam management operation in a wireless communication system to which the present disclosure may be applied.

In reference to FIG. 12, it is shown that when repetition 'ON' is configured in a CSI-RS resource set, a plurality of CSI-RS resources are repetitively used by applying the same Tx beam and when repetition 'OFF' is configured in a CSI-RS resource set, different CSI-RS resources are transmitted in a different Tx beam.

Hereinafter, a beam indication method related to downlink BM will be described.

A terminal may be configured by RRC with a list of a maximum M candidate transmission configuration indication (TCI) states at least for a purpose of a QCL(Quasi Co-location) indication. Here, M may be 64.

Each TCI state may be configured as one RS set. Each ID of a DL RS at least for a spatial QCL purpose (QCL Type D) in a RS set may refer to one of DL RS types such as an SSB, a P(periodic)-CSI RS, an SP(semi-persistent)-CSI RS, an A(aperiodic)-CSI RS, etc.

An ID of DL RS(s) in a RS set used at least for a purpose of a spatial QCL may be initialized/updated at least by explicit signaling.

Table 7 illustrates a TCI-State information element (IE).

A TCI-State IE is associated with a quasi co-location (QCL) type corresponding to one or two DL reference signals (RS).

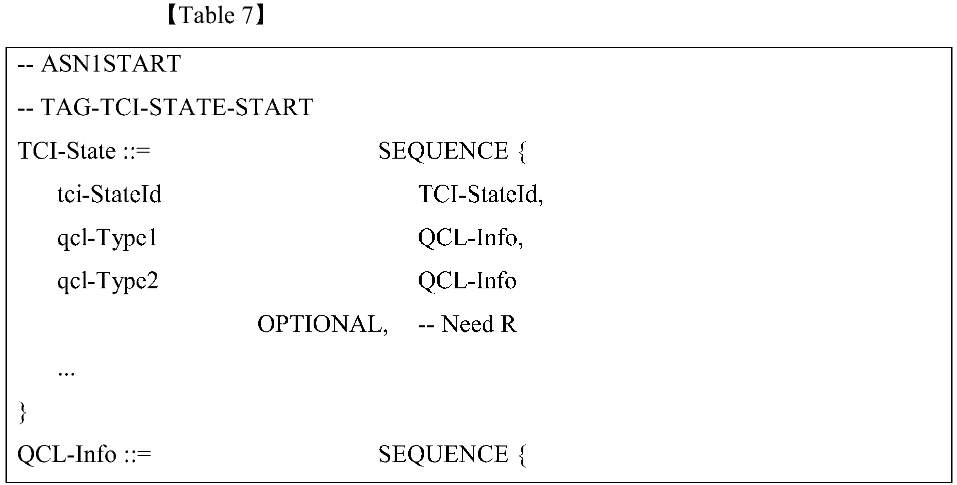

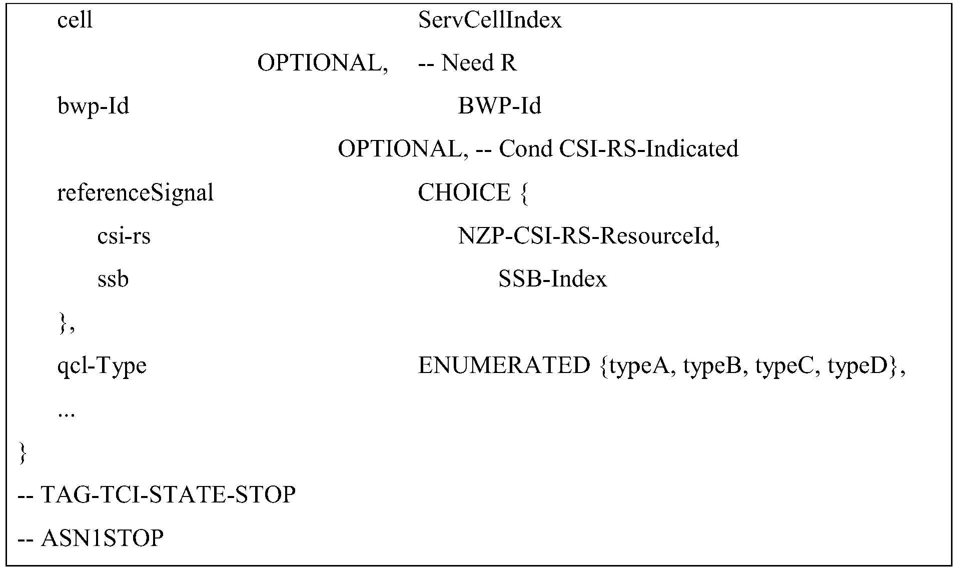

In Table 7, a bwp-Id parameter represents a DL BWP(bandwidth part) where an RS is located, a cell parameter represents a carrier where a RS is located and a referencesignal parameter represents reference antenna port(s) which is a source of a quasi co-location for corresponding target antenna port(s) or a reference signal including it. The target antenna port(s) may be a CSI-RS, a PDCCH DMRS, or a PDSCH DMRS. In an example, a corresponding TCI state ID(identifier) may be indicated in NZP CSI-RS resource configuration information to indicate QCL reference RS information for a NZP(non-zero power) CSI-RS. In another example, a TCI state ID may be indicated to each CORESET configuration to indicate QCL reference information for PDCCH DMRS antenna port(s). In another example, a TCI state ID may be indicated through DCI to indicate QCL reference information for PDSCH DMRS antenna port(s). Hereinafter, uplink beam management will be described.

For UL BM, beam reciprocity (or beam correspondence) between a Tx beam and a Rx beam may be valid or may not be valid according to terminal implementation. If reciprocity between a Tx beam and a Rx beam is valid both in a base station and a terminal, a UL beam pair may be matched by a DL beam pair. But, when reciprocity between a Tx beam and a Rx beam is not valid in any one of a base station and a terminal, a process for determining a UL beam pair is required separately from a DL beam pair determination.

In addition, although both of a base station and a terminal maintain beam correspondence, a base station may use a UL BM procedure for determining a DL Tx beam without requesting a terminal to report a preferred beam.

UL BM may be performed through beamformed UL SRS transmission and whether UL BM of an SRS resource set is applied may be configured by a (higher layer parameter) usage. When a usage is configured as 'BeamManagement(BM)', only one SRS resource may be transmitted in each of a plurality of SRS resource sets in a given time instant.

A terminal may be configured with one or more SRS(Sounding Reference Symbol) resource sets configured by (a higher layer parameter) SRS-ResourceSet (through higher layer signaling, RRC signaling, etc.) For each SRS resource set, a UE may be configured with K≥1 SRS resources (a higher layer parameter SRS-resource). Here, K is a natural number and the maximum number of K is indicated by SRS_capability.

Like DL BM, an UL BM procedure may be also classified into Tx beam sweeping of a terminal and Rx beam sweeping of a base station.

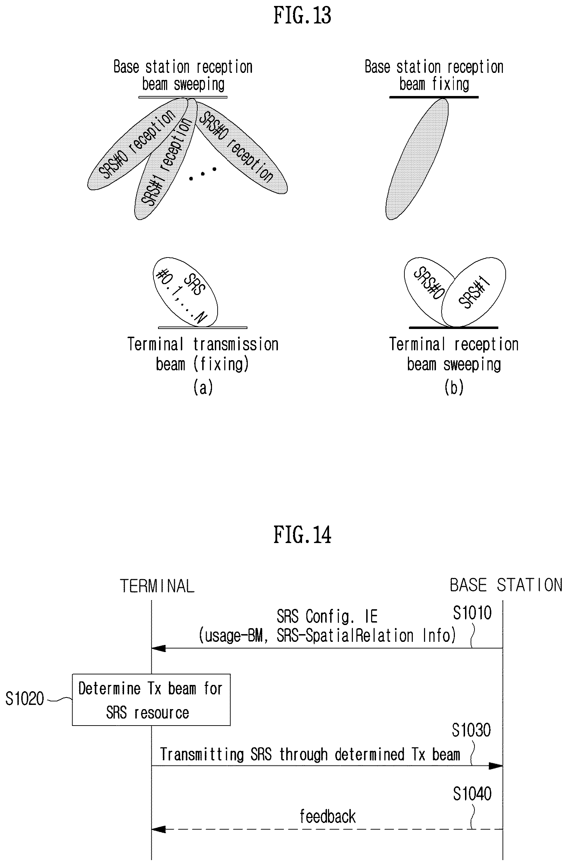

FIG. 13 is a diagram which illustrates an uplink beam management operation using SRS in a wireless communication system to which the present disclosure may be applied.

FIG. 13(a) illustrates a Rx beam determination operation of a base station and FIG. 13(b) illustrates a Tx beam sweeping operation of a terminal.

FIG. 14 is a diagram which illustrates an uplink beam management procedure in a wireless communication system to which the present disclosure may be applied.

A terminal receives RRC signaling (e.g., an SRS-Config IE) including a (higher layer parameter) usage parameter configured as 'beam management' from a base station (S1010).

Table 8 represents an example of an SRS-Config IE(Information Element) and an SRS-Config IE is used for SRS transmission configuration. An SRS-Config IE includes a list of SRS-Resources and a list of SRS-ResourceSets. Each SRS resource set means a set of SRS-resources.

A network may trigger transmission of an SRS resource set by using configured aperiodicSRS-ResourceTrigger (L1 DCI).

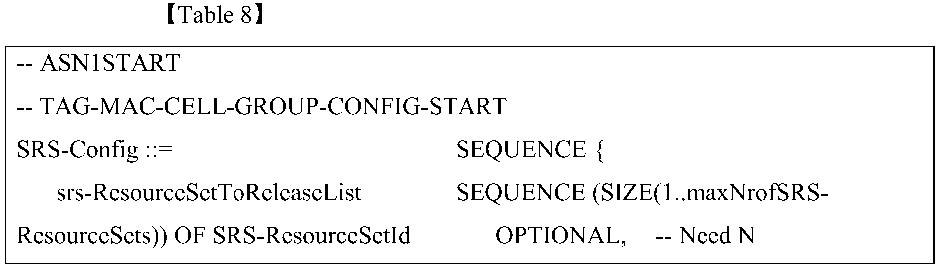

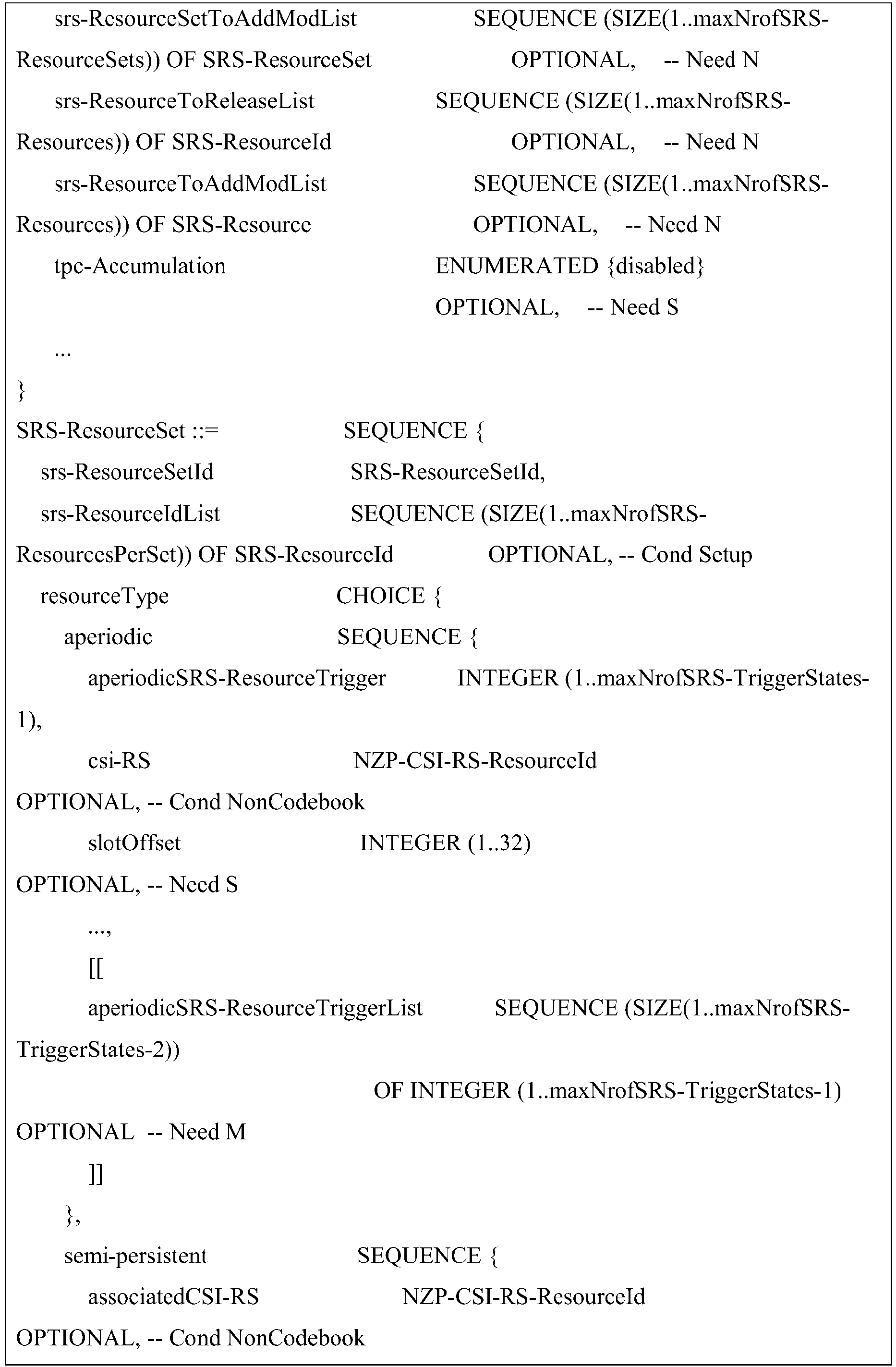

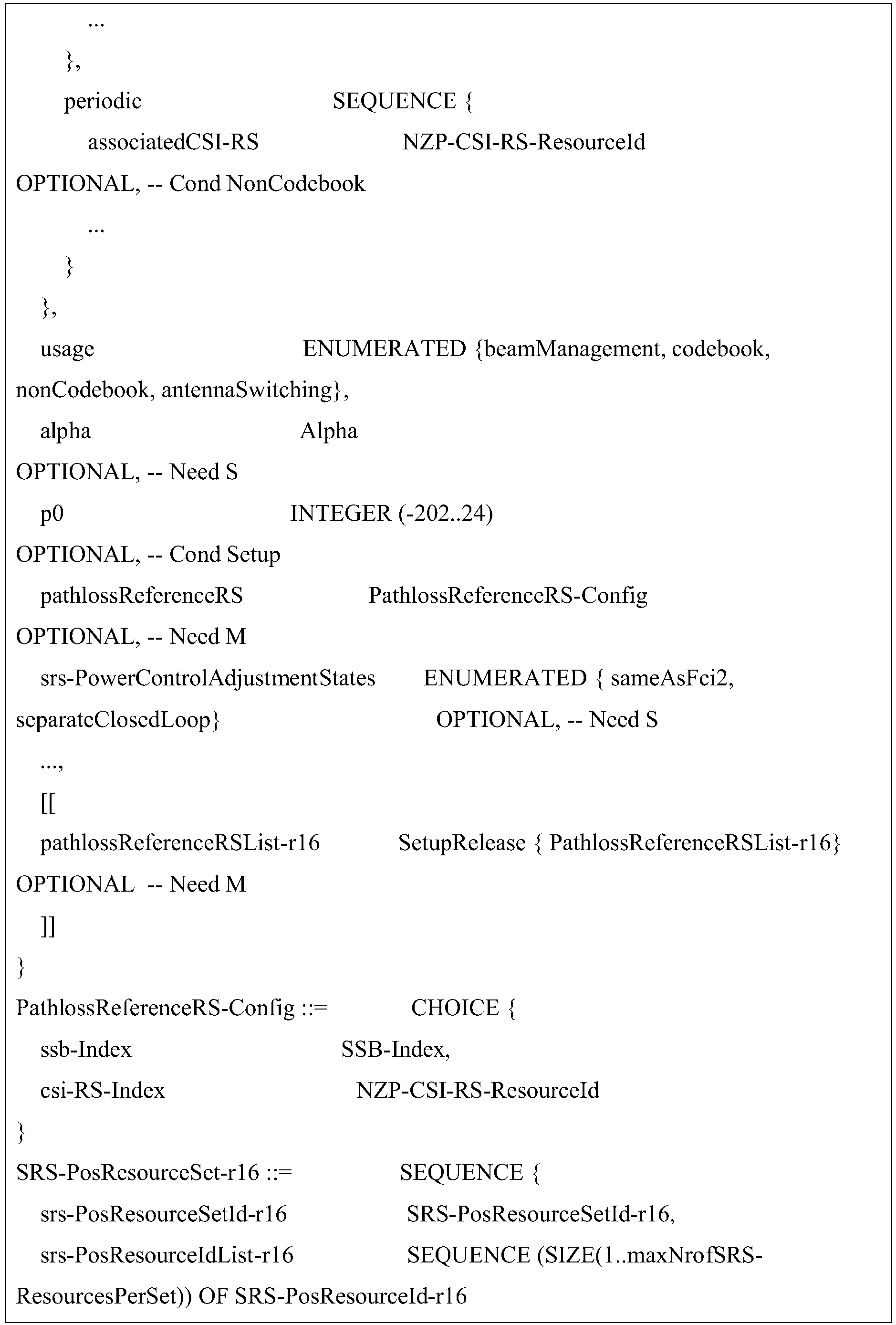

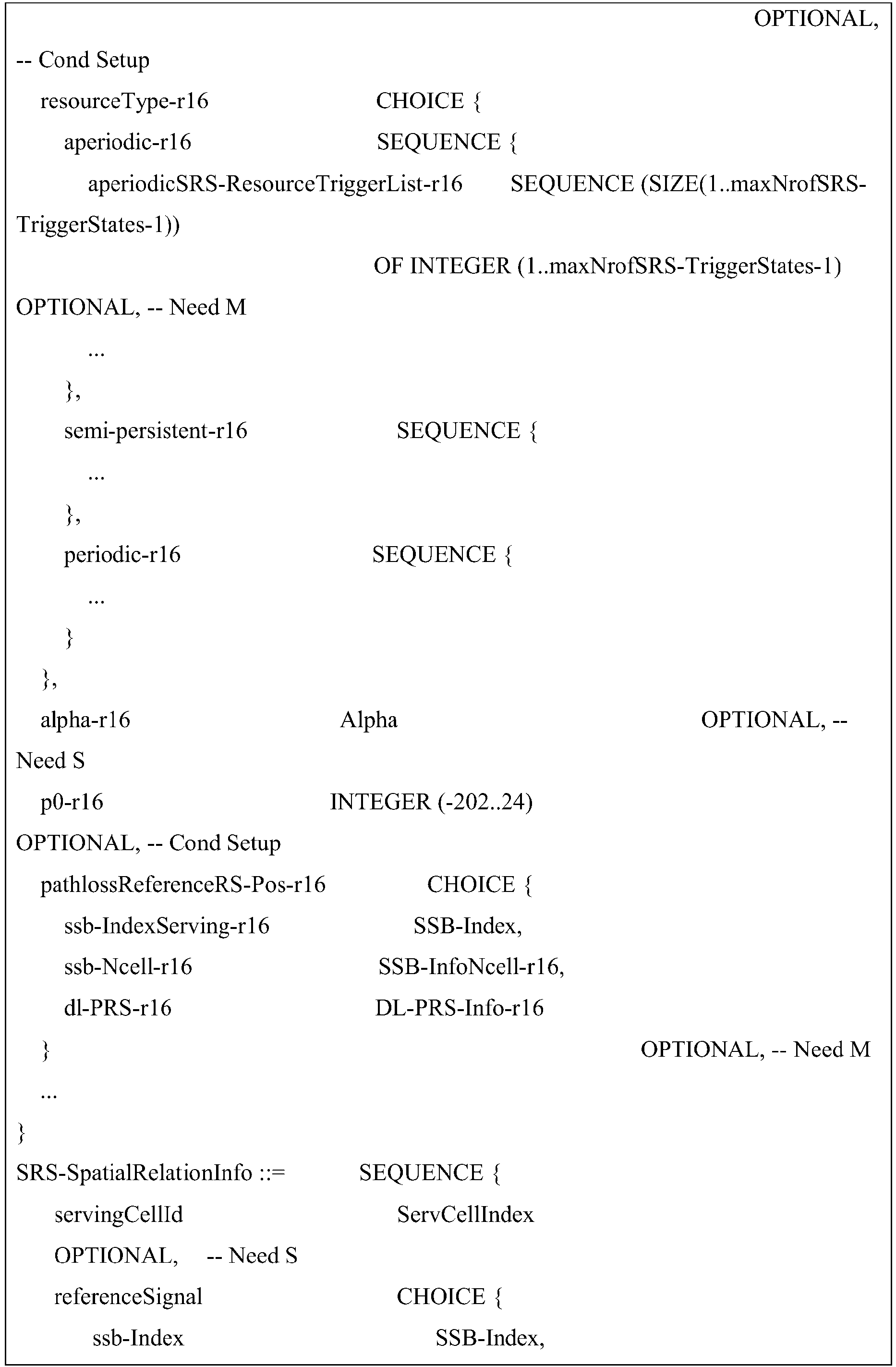

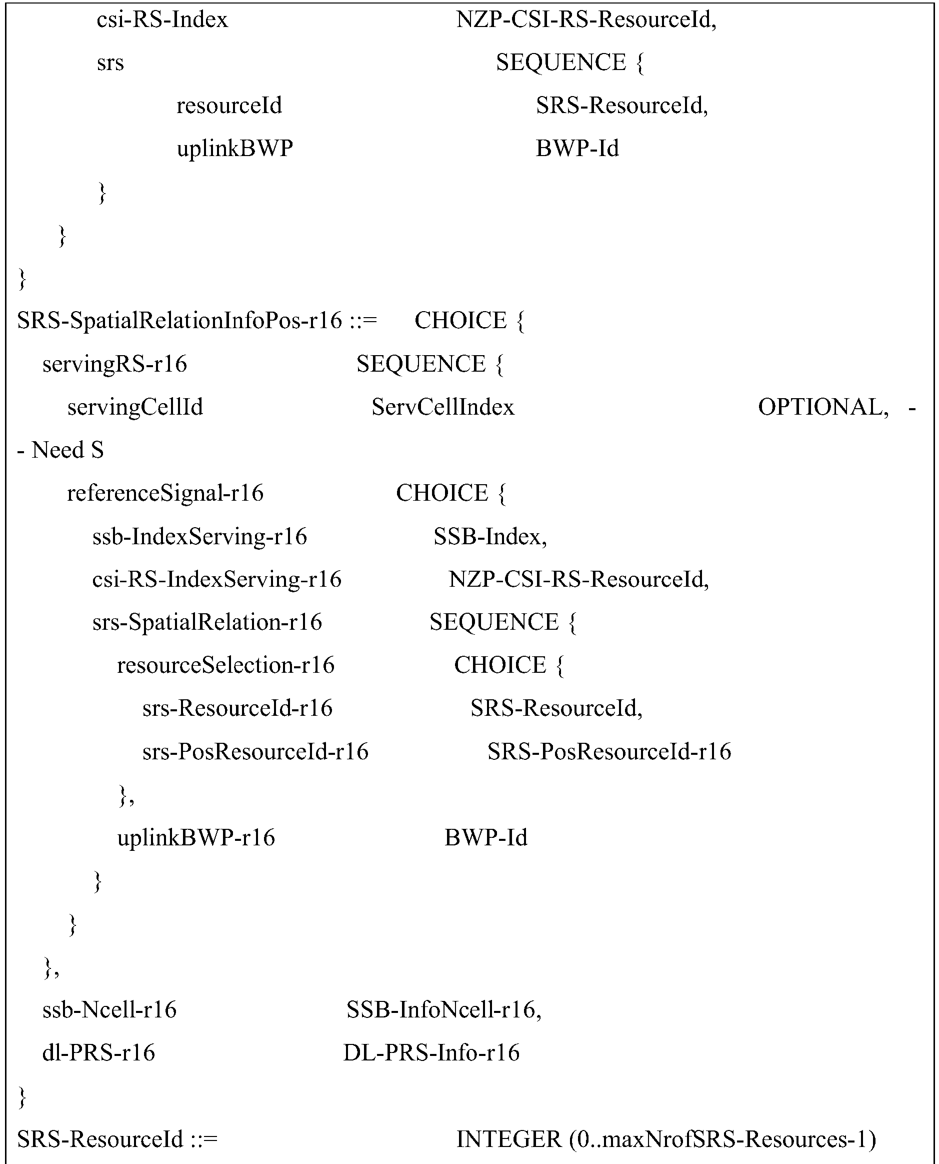

In Table 8, usage represents a higher layer parameter which indicates whether an SRS resource set is used for beam management or is used for codebook-based or non-codebook-based transmission. A usage parameter corresponds to a L1 parameter 'SRS-SetUse'. 'spatialRelationInfo' is a parameter which represents a configuration of a spatial relation between a reference RS and a target SRS. Here, the reference RS may be SSB, CSI-RS, or SRS corresponding to the L1 parameter 'SRS-SpatialRelationInfo'. Above, usage is set for each SRS resource set. If SRS is set by 'SRS-PosResourceSet-r16', the reference RS may correspond to a DL PRS (Positioning reference signal), and usage may be configured for each SRS resource set.

A terminal determines a Tx beam for an SRS resource which will be transmitted based on SRS-SpatialRelation Info included in the SRS-Config IE (S1020). Here, SRS-SpatialRelation Info is configured per SRS resource and represents whether the same beam as a beam used in a SSB, a CSI-RS or a SRS will be applied per SRS resource. In addition, SRS-SpatialRelationInfo may be configured or may not be configured for each SRS resource.

If SRS-SpatialRelationInfo is configured for an SRS resource, the same beam as a beam used in a SSB, a CSI-RS or a SRS is applied and transmitted. But, if SRS-SpatialRelationInfo is not configured for an SRS resource, the terminal randomly determines a Tx beam and transmits an SRS through the determined Tx beam (S1030).

In more detail, for a P-SRS that 'SRS-ResourceConfigType' is configured as 'periodic':
i) if SRS-SpatialRelationInfo or SRS-PosResource-r16 is set to 'SSB/PBCH', the UE may transmit the corresponding SRS resource by applying a spatial domain transmission filter that is the same as (or generated from) the spatial domain Rx filter used for reception of SSB/PBCH; or
ii) if SRS-SpatialRelationInfo or SRS-PosResource-r16 is set to 'CSI-RS', the UE may transmit the SRS resource by applying the same spatial domain transmission filter used for reception of periodic CSI-RS or SP (semi-persistent) CSI-RS; or
iii) if SRS-SpatialRelationInfo or SRS-PosResource-r16 is set to 'SRS', the UE may transmit the corresponding SRS resource by applying the same spatial domain transmission filter used for periodic SRS transmission.
iv) If spatialRelationInfoPos-r16 is set to 'PRS', the UE may transmit the corresponding SRS resource by applying the same spatial domain transmission filter used for reception of DL PRS.

Although 'SRS-ResourceConfigType' is configured as 'SP(semi-persistent)-SRS' or 'AP(aperiodic)-SRS', a beam determination and transmission operation may be applied in a way similar to the above.

Additionally, a terminal may receive or may not receive a feedback on an SRS from a base station as in the following three cases (S1040).
i) when Spatial_Relation_Info is configured for all SRS resources in a SRS resource set, a terminal transmits an SRS with a beam indicated by a base station. For example, when Spatial_Relation_Info indicates all the same SSB, CRI or SRI, a terminal repetitively transmits an SRS with the same beam. This case corresponds to FIG. 13(a) as a usage for a base station to select an Rx beam.
ii) Spatial_Relation_Info may not be configured for all SRS resources in an SRS resource set. In this case, a terminal may transmit with freely changing SRS beams. In other words, this case corresponds to FIG. 13(b) as a usage for a terminal to sweep Tx beams.
iii) Spatial_Relation_Info may be configured only for a part of SRS resources in an SRS resource set. In this case, for a configured SRS resource, an SRS may be transmitted with an indicated beam, and for a SRS resource that Spatial_Relation_Info is not configured an SRS may be transmitted by randomly applying a Tx beam by a terminal.

### BM procedure in improved wireless communication system

To ensure flexibility in beam indication in a basic wireless communication system, beams are separately indicated for each DL/UL channel/RS resource, and the indication method may be configured for each channel/RS.

In the case of the above indication method, in order to change the serving beam of multiple terminals that communicate with the base station using a single beam, the base station must indicate each terminal to change the beam for each channel/RS resource. Accordingly, there is a problem that signaling overhead may increase and beam change latency may increase.

In addition, since UL power control-related parameters (e.g., pathloss RS (PL RS)) must be changed for each UL channel/RS along with the UL beam change, signaling overhead/latency problems existed.

To resolve the problem, in improved wireless communication system, i) default spatial relation/PL RS configuration, ii) multi-CC simultaneous TCI/spatial relation update, iii) PUCCH resource group configuration based on spatial relation update, iv) MAC CE based spatial relation indication for aperiodic/semi-persistent SRS, and v) MAC CE based PL RS update for aperiodic/semi-persistent SRS and PUSCH may be applied.

Additionally, in an improved wireless communication system, the base station may configure not only RS for channel measurement but also resources for interference measurement for the terminal. The UE may measure the L1-SINR for the configured channel measurement RS and interference measurement resources, and report one or more RSs corresponding to one or more LI-SINRs with a larger value among the measured L1-SINRs.

In addition, a method described later may be applied to configure/indicate a beam in a channel/RS integrated manner for a terminal operating with a single serving beam. Hereinafter, a TCI that configures/indicates a beam in an integrated channel/RS manner for the UE will be referred to as a unified TCI state.

Specifically, the DL unified TCI state may indicate which QCL type-D RS applies for the PDCCH, PDSCH, or/and CSI-RS resources, and the UL unified TCI state may indicate the spatial relation RS (and/or PL RS) applied for PUCCH, PUSCH, and/or SRS resources.

In addition, for a UE for which beam correspondence is established (as with the default spatial relation/PL RS), since the UL spatial relation and PL RS may also be matched with the DL beam RS, the unified TCI state may be applied to both channels/RS of DL/UL. The unified TCI state that can be applied to all DL/UL channels/RS is called the joint DL/UL TCI state, and the following two modes can be supported.

i) Joint DL/UL TCI configuration/indicating mode: DL RS configured/indicated by Joint TCI state may be applied as QCL type-D RS for DL channels/RSs. As another example, the DL RS configured/indicated by the Joint TCI state may also be applied as a spatial relation RS (or/and PL RS) for UL channels/RSs. That is, when an update to the joint TCI state is indicated, the beam RS (or/and PL RS) for the corresponding DL channels/RSs and UL channels/RSs may be changed together.

ii) Separate DL and UL TCI setup/indication modes: QCL type-D source RS for DL channels/RSs is configured/indicated by DL TCI state, and the spatial relation RS (or/and PL RS) for UL channels/RSs may be configured/indicated by the UL TCI state. Here, the DL TCI state and UL TCI state may be configured/indicated separately.

The joint DL/UL TCI status may be indicated/updated through MAC-CE and/or DCI. Specifically, one or more TCI state(s) among a plurality of TCI states (i.e., TCI state pool) established by RRC signaling may be activated by MAC-CE.

When multiple TCI states are activated by MAC-CE, one TCI state among the multiple TCI states may be indicated by DCI. One TCI state among a plurality of TCI states may be indicated by DL DCI format (DCI format 1-1/1-2) (or/and DCI without PDSCH scheduling). If the DCI does not include PDSCH scheduling information, the UE may transmit an ACK for the DCI to the base station (similar to the DCI-based SPS release method).

Additionally, the UE may measure and report the optimal beam RS for each TRP. To this end, the base station may divide the beam measurement RS set/group into one or more sub-sets/sub-groups and configure them for the UE. The UE may select one or more RS(s) for each sub-set/sub-group, and report the selected RS to the base station along with its quality values (L1-RSRP, [L1-SINR]).

### Priority Rules for CSI Reports

For two overlapping PUSCHs, priority rules described below may be applied to physical channels of the same priority in UE procedure for reporting control information.

A CSI report may be associated with a priority value. A priority value may be defined as Pri_iCSI(y,k,c,s) = 2 * N_cells * M_s * y + N_cells * M_s * k + M_s *c + s.

Here, y=0 for an aperiodic (AP) CSI report carried on a PUSCH, y=1 for a semi-persistent (SP) CSI report carried on a PUSCH, y=2 for a SP CSI report carried on a PUCCH, and y=3 for a periodic (P) CSI report carried on a PUCCH.

In addition, for a CSI report carrying L1-RSRP or L1-SINR, k=0, and for a CSI report not carrying L1-RSRP or L1-SINR, k=1.

In addition, c is a serving cell index, and N_cells is the value of a higher layer parameter (e.g., maxNrofServingCells) for the maximum number of serving cells.

In addition, s is a report configuration identifier (e.g., reportConfigId), and M_s is the value of a higher layer parameter (e.g., maxNrofCSI-ReportConfigurations) for the maximum number of CSI-report configurations.

When the time occupancy of physical channels scheduled to carry two CSI reports overlaps in at least one OFDM symbol, such two CSI reports may be expressed as colliding. When a UE is configured to transmit two colliding CSI reports, it may operate as follows:

If the y values of two CSI reports are different, except for a specific cases, a CSI report with the higher Pri_iCSI(y,k,c,s) value is not transmitted by a UE. Here, a specific case may be a case where one y value is 2 and the other y value is 3 (e.g., a CSI report transmitted on a PUSCH and a CSI report transmitted on a PUCCH).

Otherwise (or if the y values of two CSI reports are the same), two CSI reports may be multiplexed or dropped according to priority rules.

### UE Procedures for Reporting Control Information

When a UE determines that PUCCH and/or PUSCH transmissions overlap different priority indexes and a parameter for multiplexing different priorities for uplink control information (UCI) (e.g., uci-MuxWithDiffPrio) is provided for a UE, a UE may operate as follows.

When a UE supports the multiplexing of information of different priorities in PUCCH/PUSCH transmission, and
- PUCCH transmission including HARQ-ACK information with a smaller priority index without repetition overlaps with PUCCH transmission including only HARQ-ACK information with a larger priority index without repetition, or
- PUCCH transmission including HARQ-ACK information with a smaller priority index without repetition overlaps with PUCCH transmission using the PUCCH resource of PUCCH formats 2/3/4 including HARQ-ACK and a scheduling request (SR) with a larger priority index without repetition, or
- PUCCH transmission including HARQ-ACK information with a smaller or larger priority index without repetition overlaps with PUSCH transmission with a larger or smaller priority index, respectively,
   a UE may
- multiplex, if any, the HARQ-ACK information of different priority indexes and the SR information of a larger priority index in the same PUCCH transmission of a larger priority index, or multiplex HARQ-ACK information that a UE intends to provide in the PUCCH transmission of a smaller or larger priority index in the PUSCH transmission of a larger or smaller priority index, respectively, and apply UE procedures for the UCI report of a different priority or procedures for a UCI report in a PUSCH, respectively, and
- drop, if any, CSI and/or a SR carried from the PUCCH transmission of a smaller priority index,
- drop, if any, a negative SR carried from the PUCCH transmission of a larger priority index, when a UE intends to multiplex the HARQ-ACK information of a higher priority index in the PUSCH transmission of a smaller priority index,
- drop the HARQ-ACK information of a smaller priority index, when a UE intends to multiplex the HARQ-ACK information of a smaller priority index in PUSCH transmission that a UE multiplexes the part 1 CSI report and part 2 CSI report of a larger priority index,
- drop the part 2 CSI report of a smaller priority index, when a UE intends to multiplex the HARQ-ACK information of smaller and larger priority indexes in PUSCH transmission that a UE multiplexes the part 1 CSI report and part 2 CSI report of a smaller priority index,
- drop the HARQ-ACK information of a smaller priority index, when intending to multiplex the HARQ-ACK information of a smaller priority index by using a PUCCH resource provided by a n1PUCCH-AN parameter in the PUCCH transmission of a larger priority index,
- drop the part 2 CSI report of a smaller priority index, when a UE intends to multiplex the HARQ-ACK information of a larger priority index in PUSCH transmission that a UE multiplexes the configured grant (CG)-UCI, or unused transmission occasion (UTO)-UCI, part 1 CSI report and part 2 CSI report of a smaller priority index.

Otherwise (or, when a UE does not support the multiplexing of information of different priorities in PUCCH/PUSCH transmission), and
- when repetition is applied to channel transmission, the following description may be applied per repetition, and when a UE intends to transmit channels described below that will overlap temporally
   -- the first PUCCH transmission of a larger priority index and the second PUCCH transmission of a smaller priority index
   -- when a UE may not transmit the first PUCCH and the second PUSCH simultaneously, the first PUCCH transmission of a larger priority index and the second PUSCH transmission of a smaller priority index
   -- when a UE may transmit the first PUCCH and the second PUSCH simultaneously, the first PUCCH transmission of a smaller priority index and the second PUSCH transmission of a larger priority index,
      a UE may
- transmit the PUCCH or PUSCH of a larger priority index subject to the restriction of UE transmission in slot configurations, UE procedures for slot format determination, cancellation indication and dual active protocol stack-based handover, and
- not transmit the PUCCH or PUSCH of a smaller priority index.

Meanwhile, by including, if any, repetition, channels described below that will overlap temporally
- the first PUCCH of a larger priority index including a SR and the second PUCCH or PUSCH of a smaller priority index, or
- the configured-grant PUSCH of a larger priority index and the PUCCH of a smaller priority index, or
- the first PUCCH of a larger priority index including HARQ-ACK information responding only to the reception of PDSCH(s) without corresponding PDCCH(s) and the second PUCCH of a smaller index including HARQ-ACK information responding only to the reception of PDSCH(s) without corresponding PDCCH(s), or the second PUCCH of a smaller priority index including a SR and/or CSI, or the configured-grant PUSCH of a smaller priority index, or the PUSCH of a smaller priority index including semi-persistent (SP)-CSI report(s) without a corresponding PDCCH, or
- the PUSCH and SR of a larger priority index including SP-CSI report(s) without a corresponding PDCCH, or the PUCCH of a smaller priority index including HARQ-ACK information responding only to the reception of PDSCH(s) without corresponding PDCCH(s), or
- the configured-grant PUSCH of a larger priority index and the configured-grant PUSCH of a smaller priority index or the PUSCH of a smaller priority index including SP-CSI report(s) without a corresponding PDCCH on the same serving cell
- the PUSCH of a larger priority index including SP-CSI report(s) without a corresponding PDCCH and the configured-grant PUSCH of a smaller priority index or the PUSCH of a smaller priority index including SP-CSI report(s) without a corresponding PDCCH on the same serving cell
- when a parameter for dynamic grant with a low priority and high configured-grant (e.g., prioLowDG-HighCG) is provided for a UE, the PUSCH of a smaller priority index scheduled by a DCI format and the configured-grant PUSCH of a larger priority index on the same serving cell
- when a parameter for dynamic grant with a high priority and low configured-grant (e.g., prioHighDG-LowCG) is provided for a UE, the PUSCH of a larger priority index scheduled by a DCI format and the configured-grant PUSCH of a smaller priority index on the same serving cell

When a UE intends to transmit the above channels,
a UE is expected to cancel the repetition of PUCCH/PUSCH transmission of a smaller priority index before the first symbol overlapping with the PUCCH/PUSCH transmission of a higher priority index when the repetition of PUCCH/PUSCH transmission of a smaller priority index overlaps with the PUCCH/PUSCH transmission of a higher priority index temporally.

### Prioritizations for Transmission Power Reductions

For a single cell operation including two uplink carriers or an operation including carrier merge, when the total UE transmission power for PUSCH or PUCCH or PRACH or SRS transmission on serving cells in a frequency range at each transmission occasion i exceeds the linear value of P_CMAX(i) at transmission occasion i, a UE may allocate power for PUSCH/PUCCH/PRACH/SRS transmission according to the priority order described below (in descending order) to ensure that the total UE transmission power transmitted on serving cells in a corresponding frequency range is less than or equal to the linear value of P_CMAX(i) in each symbol of transmission occasion i in a corresponding frequency range. When a UE transmits a SRS on multiple SRS resources, a UE may perform allocation to ensure that all REs of SRS transmission may have the same power.

When a parameter (e.g., uci-MuxWithDiffPrio) for multiplexing different priorities for UCI is provided to a UE for the purpose of power allocation and a UE multiplexes HARQ-ACK information in a PUSCH, the priority index of a PUSCH may be the larger one between (a) the priority index of a PUSCH in "UE Procedures for Reporting Control Information" described above and (b) the larger priority index of HARQ-ACK information. When determining the total transmission power for serving cells in a frequency range in the symbol of transmission occasion i, a UE may not include power for transmission starting after the corresponding symbol of transmission occasion i. The total UE transmission power in the symbol of a slot may be defined as the sum of linear values of transmission power for a PUSCH, a PUCCH, a PRACH and a SRS in the corresponding symbol of a corresponding slot.
- If any, PRACH transmission on a candidate cell
- PRACH transmission on PCell
- PUCCH or PUSCH transmission of a larger priority index
- For PUCCH or PUSCH transmission of the same priority index
   -- PUCCH transmission including HARQ-ACK information, and/or a SR, and/or a link recovery request (LRR), or PUSCH transmission including HARQ-ACK information of a corresponding priority index
   -- PUCCH transmission including CSI or PUSCH transmission including CSI
   -- PUSCH transmission not including CSI or HARQ-ACK information of a corresponding priority index, and PUSCH transmission on PCell for type-2 random access procedures
- When a parameter for the preferential performance of PRACH transmission on SCell over semi-persistent (SP) or periodic SRS transmission (e.g., prioSCellPRACH-OverSP-PeriodicSRS) is configured for a UE
   -- Aperiodic SRS transmission or PRACH transmission on a serving cell other than PCell
   -- Semi-persistent and/or periodic SRS transmission
- Otherwise (e.g., when prioSCellPRACH-OverSP-PeriodicSRS is not configured)
   -- SRS transmission including an aperiodic SRS having a higher priority than a semi-persistent and/or periodic SRS, or PRACH transmission on a serving cell other than PCell

For the same priority order and for the operation of carrier merge, a UE may preferentially apply power allocation to transmission on the primary cell of a master cell group (MCG) or a secondary cell group (SCG) over transmission on a secondary cell. For the same priority order and for an operation including two uplink carriers, a UE may preferentially apply power allocation to transmission on a carrier configured to transmit a PUCCH for a UE. When a PUCCH is not configured on any of the two uplink carriers, a UE may preferentially apply power allocation to transmission on a non-supplementary uplink carrier.

### UE-initiated CSI Report

In a wireless communication system, layer-1 (or physical layer) uplink control information has an advantage that the carrying delay time is shorter compared to higher layer control information. For example, in order for a UE to carry any information to a base station by using MAC-CE signaling of layer-2 or RRC message of layer-3, the scheduling request (SR) procedures of a UE and the PUSCH resource allocation procedures of a base station (based on a corresponding SR) may be required, which may result in time delay and overhead. In addition, generally, as it is higher layer information, the time required to obtain information (e.g., decoding time, processing time, etc.) may be longer. In order for a UE to transmit layer-1 uplink control information, a physical uplink channel (e.g., PUCCH, PUSCH) resource must be configured/allocated (in advance) to a corresponding UE. Accordingly, from the perspective of a base station/a network, as the number of terminals/UEs increases, the amount of uplink (UL) resources that must be allocated to each terminal/UE also increases, which may increase the burden on the overall UL resource overhead.

Accordingly, in a wireless communication system, information that must be carried relatively urgently for the operation of a physical layer, etc. (e.g., a SR (e.g., control information for PUSCH allocation), HARQ-ACK (e.g., control information for retransmission), CSI (e.g., control information for determining scheduling/MCS/precoding), beam information (e.g., control information for beam determination/beamforming)) may be transmitted from a UE to a network as physical layer uplink control information (UCI). Excluding a SR from this UCI, a base station/a network may determine/control a time point at which a UE reports control information. For this network-initiated (NW-initiated) or network-triggered (NW-triggered) report, there is a limitation that a UE must be configured/indicated to frequently send UCI in an environment where a wireless channel is likely (or highly likely) to change rapidly. In other words, in this environment, a problem may occur that the UL resource overhead for a UCI report and the related DL measurement RS overhead increase and THE power consumption of a UE also increases due to the frequent uplink transmission of a UE. In addition, since a UL resource must be allocated to each UE, the UL resource overhead increases as the number of UEs within a cell/TRP coverage increases.

In order to overcome the limitation of this NW-initiated/triggered report, a UE-initiated/triggered report method or an event-initiated/driven report method is being discussed. In this method, whether to report UCI and/or a report time point may be determined by a UE. In other words, when a corresponding (UCI) report is performed only when necessary (e.g., only when a specific event occurs), there is an advantage that a rapid control information report is performed through a layer-1 (or lower layer)-based information report while reducing UL resource overhead and UE power consumption.

In this regard, the introduction of beam management or beam report initiated by a terminal/UE (i.e., UE-initiated) or derived by an event (i.e., event-driven) is being discussed to reduce overhead and/or latency. This UE-initiated beam management considers unified TCI, and may be applied to various frequency ranges and network node structures including frequency range 2 (FR2) and a single TRP (S-TRP), and also may be applied to intra-cell and inter-cell beam management. In this regard, uplink signaling content(s) for UE-initiated/event-driven beam report are defined for rapid beam switching, and procedures for this need to be defined. In addition, considering the UE-initiated/event-driven characteristics of uplink transmissions mainly designed for the purpose of a beam report, an uplink signaling medium/container needs to be defined.

In the present disclosure, a beam report may mean a CSI report including UE's measurement information for a beam (e.g., L1-RSRP, L1-SINR, etc.) and/or identification information for a beam (e.g., a CSI-RS resource index, a SSB resource index, etc.). For a beam report corresponding to one type of the existing NW-initiated/triggered CSI report (or CSI feedback), a network may provide a UE with a UL resource and a report configuration for a beam report in advance, and a UE may perform a beam report accordingly. In contrast, for a UE-initiated/event-driven beam report, an event for a beam report is configured/defined for a UE, and a UE may determine whether an event occurs and perform a beam report only when an event occurs.

A priority among the existing uplink channels/signals (e.g., a priority index and a UCI content-based operation in the section of "UE Procedures for Reporting Control Information" described above, and a power allocation priority in the section of "Prioritizations for Transmission Power Reductions" described above) is not defined for a priority between other uplink channel(s)/signal(s) and an uplink channel including a UEI CSI report such as a beam report initiated by a UE based on an event. Accordingly, in order to resolve uncertainty for the priority of an event-based UEI CSI report, in the present disclosure, when a collision occurs between an uplink channel including a UEI CSI report and other uplink channels/signals (or time resources overlap partially/fully), examples of a priority between them are described.

In the present disclosure, when information/a value is defined, it may mean that a base station and a UE know corresponding information/value in advance without signaling/indication for corresponding information between a base station and a UE. In the present disclosure, when information/a value is configured for a UE, it may mean that a base station provides corresponding information/value to a UE through higher layer (e.g., L3) signaling. In the present disclosure, when information/a value is indicated for a UE, it may mean that a base station provides corresponding information/value to a UE through L2/L1 signaling such as MAC CE or DCI, etc.

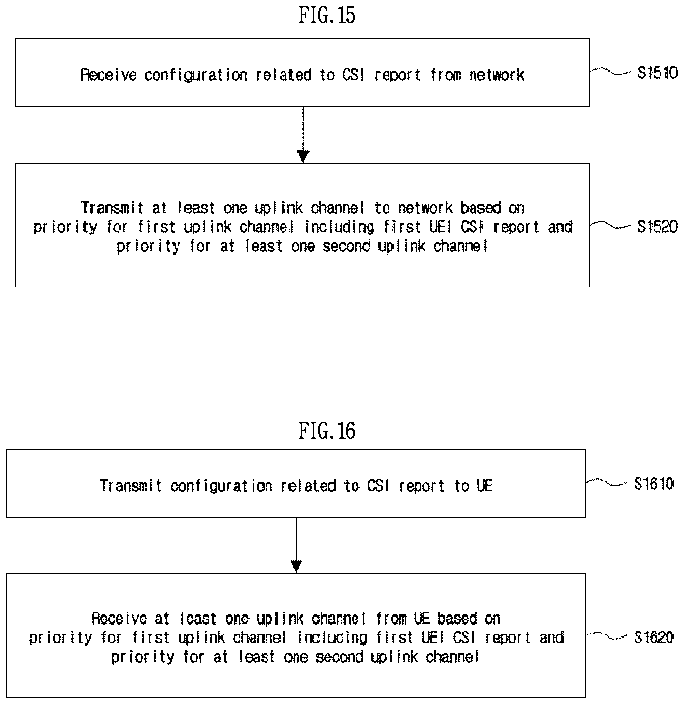

FIG. 15 is a diagram for describing an example of a method performed by a UE according to the present disclosure.

In S1510, a UE may receive a configuration related to a CSI report from a network.

A configuration related to a CSI report may include information on an identifier for a CSI report configuration (e.g., reportConfigId), a type related to a CSI report (e.g., reportConfigType for a periodic/semi-persistent/aperiodic CSI report on a PUCCH/a PUSCH), a report content (e.g., reportQuantity of RI/PMI/CQI/CRI/SSB-Index/L1-RSRP/L1-SINR, etc.), etc.

A configuration related to a CSI report may further include a configuration for a UE-initiated (or UEI) CSI report (e.g., a resource for reporting whether an event occurs, and/or a resource for a UEI CSI report, etc.).

In S1520, a UE may transmit at least one uplink channel to a network based on a priority for the first uplink channel including the first UEI CSI report and a priority for at least one second uplink channel.

At least one second uplink channel may include the second UEI CSI report or may include information other than a UEI CSI report.

For example, a priority for the first uplink channel (e.g., an uplink channel including the first UEI CSI report) may be based on event-related information (e.g., an event type, an event time, etc.). For example, a priority for the first uplink channel may be based on a priority index (e.g., a priority index that is the same as the existing larger priority index (e.g., 1) and smaller priority index (e.g., 0) or a new priority index that is different from it). For example, a priority for the first uplink channel may be based on power allocation order (e.g., the order that is the same as the order based on a combination of UCI content (e.g., a UCI type such as HARQ-ACK/SR/LRR/CSI, etc. or whether to include UCI) and a channel type (e.g., a PUCCH/a PUSCH) or the new order that is different from it). For example, a priority for the first uplink channel may be defined/configured based on at least one of event-related information, a priority index or power allocation order.

For example, when the transmissions of a plurality of uplink channels including the first uplink channel and at least one second uplink channel collide, the transmission of an uplink channel of the highest priority among a plurality of uplink channels may be performed, and the transmission of at least one remaining uplink channel may be dropped. For example, when the transmissions of a plurality of uplink channels including the first uplink channel and at least one second uplink channel collide, the transmission of at least one uplink channel of a lower priority among a plurality of uplink channels may be dropped, and the transmission of at least one uplink channel of a higher priority may be multiplexed. For example, when the transmissions of a plurality of uplink channels including the first uplink channel and at least one second uplink channel collide, power may be allocated in descending order from a high priority to a low priority among a plurality of uplink channels.

For example, a priority per event type or per event time for a different uplink channel including a UEI CSI report may be applied. For example, the first priority for the first UEI CSI report associated with the first type of event and the second priority for the second UEI CSI report associated with the second type of event may be the same or different. Here, the first priority and the second priority may be included in at least two priorities for at least two event types. Alternatively, the first priority for the first UEI CSI report associated with an event at the first time point and the second priority for the second UEI CSI report associated with an event at the second time point may be the same or different.

For example, a priority index for the first uplink channel including the first UEI CSI report: may have the value of a priority index that is the same as or different from the existing larger first priority index and smaller second priority index. A different priority index is, for example, the value of the third priority index having a medium value between the value of the first priority index and the value of the second priority index, the fourth priority index larger than the value of the first priority index, or the fifth priority index smaller than the value of the second priority index, and a priority index for the first uplink channel including the first UEI CSI report may be defined/configured. For example, the value of the first priority index may be 1, the value of the second priority index may be 0, the value of the third priority index may be 0.5, the value of the fourth priority index may be 2, and the value of the fifth priority index may be -1.

For example, for uplink channel transmissions having the same priority index, power allocation order for the first uplink channel transmission including the first UEI CSI report may be the same as one of the existing power allocation orders or may have the new order different from the existing power allocation order. For example, the existing power allocation orders may include the first order of uplink control channel transmission including at least one of HARQ-ACK information, a SR or a LRR, or uplink shared channel transmission including HARQ-ACK information; the second order of uplink control channel transmission including CSI or uplink shared channel transmission including CSI; and the third order of uplink channel transmission not including HARQ-ACK information or CSI, and uplink shared channel transmission on a primary cell in a 2-step random access procedure. For example, power allocation order for the first uplink channel transmission including the first UEI CSI report may be defined/configured as one of the same order as the first order, or the order before the first order; the order after the first order and before the second order; the order after the second order and before the third order; or the same order as the third order, or the order after the third order.

For example, a UEI CSI report may include at least one of the first report for specific event occurrence, or the second report including a beam report. For example, a priority for the first report may be the same as or different from a priority for the second report. When it is different, a priority for the first report may be defined/configured to be higher than a priority for the second report.

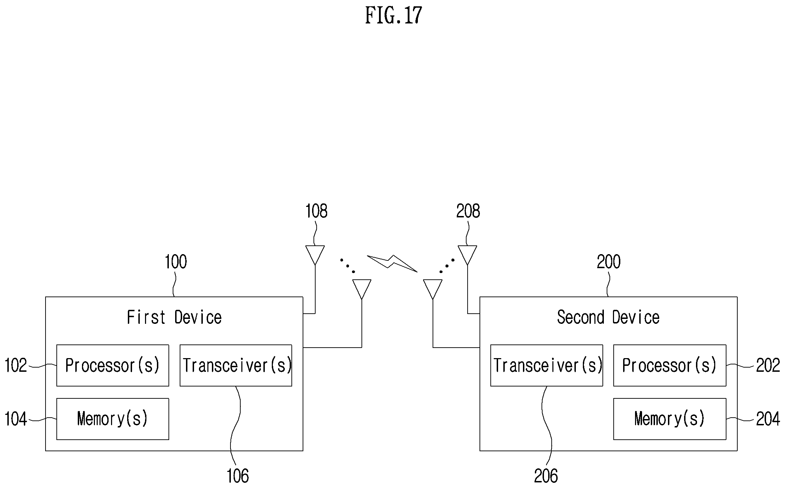

A method described in the example of FIG. 15 may be performed by the first wireless device 100 in FIG. 17. For example, at least one processor 102 of the first wireless device 100 in FIG. 17 may be configured to receive a configuration related to a CSI report from a network through at least one transceiver 106 and transmit at least one uplink channel to a network through at least one transceiver 106 based on a priority for the first uplink channel including the first UEI CSI report and a priority for at least one second uplink channel. Furthermore, at least one memory 104 of the first wireless device 100 may store instructions for performing a method described in the example of FIG. 15 or examples described below when executed by at least one processor 102.

FIG. 16 is a diagram describing an example of a method performed by a base station according to the present disclosure.

In S1610, a base station may transmit a configuration related to a CSI report to a UE.

In S1620, a base station may receive at least one uplink channel transmitted from a terminal based on a priority for the first uplink channel including the first UEI CSI report and a priority for at least one second uplink channel.

The specific features for a priority for an uplink channel including a UEI CSI report and a priority for other uplink channels are the same as described by referring to the example of FIG. 15, so an overlapping description is omitted.

A method described in the example of FIG. 16 may be performed by the second wireless device 200 in FIG. 17. For example, at least one processor 202 of the second wireless device 200 in FIG. 17 may be configured to transmit a configuration related to a CSI report to a UE through at least one transceiver 206 and receive at least one uplink channel from a UE through at least one transceiver 206 based on a priority for the first uplink channel including the first UEI CSI report and a priority for at least one second uplink channel. Furthermore, at least one memory 204 of the second wireless device 200 may store instructions for performing a method described in the example of FIG. 16 or examples described below when executed by at least one processor 202.

Although the present disclosure mainly describes a UEI beam report as a representative example, the examples of the present disclosure may also be applied to a UEI CSI report (i.e., a UEI report such as RI/PMI/CQI, etc., not a beam report). In other words, unless the examples of the present disclosure distinguish between a beam report and a CSI report other than a beam report, a beam report may be substituted with a CSI report.

In the examples of the present disclosure, when an event related to a specific CSI report occurs, the request of a UE to a network for scheduling of a UL channel for a corresponding CSI report may include a UE notifying a network of the occurrence of an event itself. In other words, of course, a UE may directly request a network for scheduling an uplink channel, and a UE may also notify a network only of the occurrence of an event, and a network may determine whether to schedule an uplink channel.

In the examples of the present disclosure, an identifier (ID) may be substituted as an index.

In the present disclosure, a term 'beam' may correspond to a source RS for a spatial filter or a spatial relation, or a QCL (Type-D) RS, or a (DL/UL/Joint) TCI state, or a spatial relation RS.

Hereinafter, various examples of the present disclosure for priority rules for resolving a case where an uplink channel including a corresponding report in a UEI beam report collides (or time overlaps) with an uplink channel of another UEI beam report or other uplink channels are described.

### Embodiment 1

It may be assumed that multiple events for a UEI beam report are configured and a different UEI beam report is reported for each event. In this case, a different priority may be configured/defined for each event.

For example, event-related priorities may be configured/defined as two types of a high priority event and a low priority event. For example, a base station may configure whether a specific event (or a specific type of event) has a high priority or a low priority to a UE. Alternatively, whether it is a high priority event or a low priority event may be predefined in a fixed manner for each event (or for each event type), and a base station may not configure a corresponding priority.

For example, a UE may determine a priority for each event and report it to a network. As an additional example, a UE may calculate the priority value of a UEI beam report (e.g., Pri_iCSI(y,k,c,s)) and report a calculated priority value to a network along with a corresponding event/CSI report.

A priority level for an event (or a UEI report related to an event) may be configured/defined as two levels of a high priority level and a low priority level, or may be configured/defined as a multi-level priority level exceeding 2 (e.g., level 1, 2, 3, 4, ..).

A priority configured for an event may be applied as a priority for a UEI CSI report (or a beam report) related to a corresponding event. For example, when a UEI beam report for a high priority event and a UEI beam report for a low priority event collide, a UE may transmit a beam report for a high priority event and drop a beam report for a low priority event. Alternatively, even when a UE may multiplex UEI beam reports, when a given uplink channel capacity is smaller than the payload size of UEI beam reports to be reported, only UEI beam reports that may be accommodated in an uplink channel capacity may be multiplexed and transmitted by sequentially dropping from a UEI beam report for the lowest priority event.

The priority of an event (or a UEI report associated with an event) may be configured/defined based on a time point for a corresponding event. For example, when it is assumed that an artificial intelligence/machine learning (AI/ML) UE may perform beam prediction for the future time point, a distinct priority may be configured/defined for a UEI beam report triggered by satisfying an event occurrence condition for the present or near future and a UEI beam report triggered by satisfying an event occurrence condition for the distant future. For example, it may be assumed that an event occurs when a condition is satisfied that the RSRP of a RS resource configured as a channel measurement resource (CMR) is greater than or equal to a specific value.

In this case, an event for the present/near future may be configured/defined as a higher priority event, and an event for the distant future may be configured/defined as a lower priority event. It may correspond to a case where the priority of a report is determined/granted considering that as the future is far away from the present time point, the accuracy of prediction is reduced.

Alternatively, an event for the present/near future may be configured/defined as a lower priority event, and an event for the distant future may be configured/defined as a higher priority event. It may correspond to a case where the priority of a report is determined/granted considering that a long-term report for the distant future is more useful to a network from the present time point.

In this regard, a network may configure time information for the determination of an event occurrence condition (e.g., information on a time resource (e.g., a slot, a symbol, etc.) for which whether an event occurrence condition is satisfied must be determined) to a UE. For example, when it is based on the specific time (e.g., the latest CMR measurement time), an event for determining whether an occurrence condition is satisfied at a time point after x symbols/slots/time may be defined, and a base station may configure a x value to a UE. Alternatively, a base station may configure to a UE whether to perform prediction-based event detection at a higher level.

For example, a UE may report to a network information on the future time point related to an event (e.g., information representing a time resource (e.g., a slot, a symbol, etc.) for which a UE determines whether an event occurrence condition is satisfied). This information on the future time point related to an event may be reported from a UE to a network with a UEI report (e.g., with a report on whether an event occurs, or a beam report).

For example, a UE may predict a beam quality metric for slot n+k1 (here, k1>0) based on a beam measured at slot index n. For example, a beam quality metric may be L1-RSRP, L1-SINR, a hypothetical block error rate (BLER), etc. A UE may determine whether an event occurrence condition is satisfied based on a beam quality metric predicted for slot index n+k1. In addition, a UE may determine whether an event occurrence condition is satisfied based on a beam quality metric predicted for slot index n+k2 (here, k2>k1). In this example, information on the future time point may correspond to k1 or k2. In addition, when a relationship of k2>k1 is satisfied, an event for slot index n+k2 becomes an event for a relatively distant future compared to an event for slot index n+k1.

For example, examples of an event may be as follows.

The first event: The quality of a current beam is worse than a specific threshold value.

The second event: The quality of at least one new beam (e.g., L1-RSRP) becomes a threshold value better than (the quality of) a current beam.

The third event: The quality of a new beam is better than a specific threshold value.

The fourth event: The quality of a current beam is worse than the first threshold value, and the quality of at least one new beam is better than the second threshold value.

The fifth event: The absolute value of a difference between the quality of a current beam and the quality of at least one new beam is less than a threshold value.

The sixth event: A current beam is not included in the best K (here, K>1) beams (among the beams configured for measurement and reporting).

The seventh event: The quality of at least one new beam (e.g., L1-RSRP) becomes a threshold value better than a RS derived from an enabled TCI state having the Q-th best quality.

In examples described above, a current beam corresponds to a beam currently being used by a UE, which may correspond to a QCL source RS configured through a TCI state indicated by a base station to a UE. Alternatively, in examples described above, a current beam may correspond to a SSB which is in a QCL relationship with a QCL source RS configured through a TCI state indicated by a base station to a UE. A new beam may be separately configured by a base station to a UE for event detection.

In examples described above, the present/near future (e.g., time point A) and the distant future (e.g., time point B) correspond to one example of time order, and the examples of the present disclosure are not necessarily limited to future time points. For example, even for the general time order such as past/present/future time points (i.e., a relative past/future relationship between time point A and time point B (or temporally before/after)), a different priority may be configured/defined for an event (or a UEI report associated with an event) at a different time point.

### Embodiment 2

In order to preferentially transmit the existing uplink URLLC TB/UCI over other remaining TBs/UCI, a priority index for an uplink channel may be applied. This priority index may be indicated through DCI for a dedicated grant (DG) PUSCH, and may be indicated through RRC signaling/DCI for a configured grant (CG) PUSCH. For HARQ-ACK information (e.g., A/N), a priority index may be configured for each PUCCH resource where A/N is transmitted through (e.g., RRC signaling). For a SR, a priority index may be configured for each SR resource through (e.g., RRC signaling). The multiplexing between uplink channels corresponding to a different priority index may be supported according to the multiplexing capability of a UE, or in a UE that does not support such capability, only an uplink channel corresponding to a high priority index may be reported and uplink channels corresponding to a low priority index may be dropped. This existing priority index-based operation may refer to some details in the section of "UE Procedures for Reporting Control Information" described above.

This existing priority index-based operation does not distinguish/consider a UEI CSI report, but various examples of the present disclosure for configuring/defining a priority index for an uplink channel for a UEI CSI report are described below.

For example, a priority index for an uplink channel for a UEI CSI report may be configured as the existing larger value (e.g., 1). Since a UE is a subject of measurement for a CMR (e.g., a CSI-RS/a SSB), it may first/better identify the time-varying/current state of a beam/CSI. Accordingly, a UEI beam report may be a more valid/utilizable report than the existing CSI report (which is preconfigured by a base station). For this reason, a priority index for an uplink channel for a UEI CSI report may be configured as a larger value (e.g., 1). Alternatively, a UE may expect that a priority index for an uplink channel for a UEI CSI report is configured as a larger value (e.g., 1).

For example, a priority index for an uplink channel for a UEI CSI report may be configured as a medium value (e.g., 0.5) between the existing larger value (e.g., 1) and the existing smaller value (e.g., 0).

For example, a priority index for an uplink channel for a UEI CSI report may be configured as a value (e.g., 2) larger than the existing larger value (e.g., 1). Accordingly, a higher priority than the existing priority index-based high priority may be configured/defined for a UEI CSI report. Since determining/changing a beam is very important for securing UL/DL coverage in a higher frequency band, this example may be applied when reporting a UEI beam/CSI is more important and urgent than transmitting URLLC data.

For example, a priority index for an uplink channel for a UEI CSI report may be configured as a value (e.g., -1) smaller than the existing smaller value (e.g., 0). Accordingly, a lower priority than the existing priority index-based low priority may be configured/defined for a UEI CSI report. For a UEI CSI/beam report, since only a UE knows whether an event occurs until a UE reports it to a network, a base station may not know in advance whether a UEI CSI/beam report will be performed by a UE. Accordingly, a base station may have uncertainty in applying priority rules. For example, it is difficult for a base station to clearly determine which of an operation for applying priority rules by assuming that a UEI beam report is performed and expecting uplink reception accordingly or an operation for applying priority rules by assuming that a UEI beam report is not performed and expecting uplink reception accordingly will be applied. In order to resolve this uncertainty, a priority index for an uplink channel for a UEI CSI/beam report may be configured as a new value lower than the existing priority indexes to ensure that an uplink channel for a UEI CSI/beam report is always dropped when it collides with other uplink channels. In other words, a UEI CSI/beam report may be transmitted only when that uplink channel does not collide with other uplink channels.

### Embodiment 3

Power may be allocated preferentially from the uplink channel of a carrier (or a cell) corresponding to a high priority according to the priority of uplink power allocation in a carrier merge environment. In a non-carrier merge environment (e.g., a single cell environment), power control is applied so that it does not exceed the maximum transmission power of a UE in one cell, but in a carrier merge environment (e.g., a multi-cell environment), even when power control is applied in each cell, it may exceed the maximum transmission power of a UE when uplink scheduling is performed simultaneously on multiple cells, so the priority of uplink power allocation therefor needs to be defined.

As described in the section of "Prioritizations for Transmission Power Reductions" described above, for PUCCH or PUSCH transmissions of the same priority index, it is defined that a PUCCH transmission report including CSI or a PUSCH transmission report including CSI has lower power allocation order than PUCCH transmission including HARQ-ACK information, and/or a SR, and/or a LRR, or PUSCH transmission including HARQ-ACK information of a corresponding priority index and has higher power allocation order than PUSCH transmission not including CSI or HARQ-ACK information of a corresponding priority index, and PUSCH transmission on a PCell for a type-2 random access procedure.

For a UEI CSI report, power allocation order (or priority) distinct from PUCCH transmission including CSI or a PUCCH including the existing CSI (hereinafter, a non-UE-initiated (or non-UEI) CSI report) may be configured/defined.

### Embodiment 3-1

For a UEI CSI report, a higher priority than a non-UEI CSI report may be configured/defined. It may be applied in terms of power allocation order.

For example, the corresponding part of the section of "Prioritizations for Transmission Power Reductions" described above may be modified as follows.
- For PUCCH or PUSCH transmission of the same priority index
   -- PUCCH transmission including HARQ-ACK information, and/or a SR, and/or a link recovery request (LRR), or PUSCH transmission including HARQ-ACK information of a corresponding priority index
   -- PUCCH or PUSCH transmission including a UE-initiated CSI/beam report
   -- PUCCH transmission including CSI or PUSCH transmission including CSI
   -- PUSCH transmission not including CSI or HARQ-ACK information of a corresponding priority index, and PUSCH transmission on PCell for type-2 random access procedures

Since a UE is a subject of measurement for a CMR (e.g., a CSI-RS/a SSB), it may first/better identify the time-varying/current state of a beam/CSI. Accordingly, a UEI beam report may be a more valid/utilizable report than the existing CSI report (which is preconfigured by a base station). For this reason, it may be useful to report a UEI beam report preferentially when a collision with the existing CSI report occurs.

Alternatively, the corresponding part of the section of "Prioritizations for Transmission Power Reductions" described above may also be modified as follows.
- For PUCCH or PUSCH transmission of the same priority index
   -- PUCCH or PUSCH transmission including a UE-initiated CSI/beam report
   -- PUCCH transmission including HARQ-ACK information, and/or a SR, and/or a link recovery request (LRR), or PUSCH transmission including HARQ-ACK information of a corresponding priority index
   -- PUCCH transmission including CSI or PUSCH transmission including CSI
   -- PUSCH transmission not including CSI or HARQ-ACK information of a corresponding priority index, and PUSCH transmission on PCell for type-2 random access procedures

Alternatively, the corresponding part of the section of "Prioritizations for Transmission Power Reductions" described above may also be modified as follows.
- For PUCCH or PUSCH transmission of the same priority index
   -- PUCCH transmission including HARQ-ACK information, and/or a SR, and/or a link recovery request (LRR), or PUSCH transmission including HARQ-ACK information of a corresponding priority index, or PUCCH or PUSCH transmission including a Ue-initiated CSI/beam report
   -- PUCCH transmission including CSI or PUSCH transmission including CSI
   -- PUSCH transmission not including CSI or HARQ-ACK information of a corresponding priority index, and PUSCH transmission on PCell for type-2 random access procedures

### Embodiment 3-2

For a UEI CSI report, a lower priority than a non-UEI CSI report may be configured/defined. It may be applied in terms of power allocation order.

For example, the corresponding part of the section of "Prioritizations for Transmission Power Reductions" described above may be modified as follows.
- For PUCCH or PUSCH transmission of the same priority index
   -- PUCCH transmission including HARQ-ACK information, and/or a SR, and/or a link recovery request (LRR), or PUSCH transmission including HARQ-ACK information of a corresponding priority index
   -- PUCCH transmission including CSI or PUSCH transmission including CSI
   -- PUCCH or PUSCH transmission including a UE-initiated CSI/beam report
   -- PUSCH transmission not including CSI or HARQ-ACK information of a corresponding priority index, and PUSCH transmission on PCell for type-2 random access procedures

Traditionally, a base station is a subject that manages the UL resource of all UEs within a cell and gives a configuration/an indication to UEs, so it is desirable to prioritize a dynamic CSI report triggered by a base station over a dynamic beam/CSI report triggered by a UE.

Alternatively, the corresponding part of the section of "Prioritizations for Transmission Power Reductions" described above may also be modified as follows.
- For PUCCH or PUSCH transmission of the same priority index
   -- PUCCH transmission including HARQ-ACK information, and/or a SR, and/or a link recovery request (LRR), or PUSCH transmission including HARQ-ACK information of a corresponding priority index
   -- PUCCH transmission including CSI or PUSCH transmission including CSI
   -- PUSCH transmission not including CSI or HARQ-ACK information of a corresponding priority index, and PUSCH transmission on PCell for type-2 random access procedures
   -- PUCCH or PUSCH transmission including a UE-initiated CSI/beam report

Alternatively, the corresponding part of the section of "Prioritizations for Transmission Power Reductions" described above may also be modified as follows.
- For PUCCH or PUSCH transmission of the same priority index
   -- PUCCH transmission including HARQ-ACK information, and/or a SR, and/or a link recovery request (LRR), or PUSCH transmission including HARQ-ACK information of a corresponding priority index
   -- PUCCH transmission including CSI or PUSCH transmission including CSI
   -- PUSCH transmission not including CSI or HARQ-ACK information of a corresponding priority index, and PUSCH transmission on PCell for a type-2 random access procedure, or PUCCH or PUSCH transmission including a UE-initiated CSI/beam report

### Embodiment 4

In examples described above, a UEI CSI report (or a UEI beam report) may be separated into two reports (i.e., a 2-step report). The two reports may be transmitted sequentially on a different time resource in a TDM method, or may be transmitted (simultaneously) on a different frequency resource in a FDM method.

For example, the first report occasion that reports information on whether an event occurs itself and the second report occasion that reports beam information related to an event (e.g., beam-related report quantity or content such as a CRI/SSB index and/or L1-RSRP/L1-SINR, etc.) may be configured/defined separately in a TDM/FDM method. A priority for the first report occasion and a priority for the second report occasion may be configured/defined in the same method, or may be configured/defined in a different method.

For example, since the first report occasion includes a relatively high level of information and may affect whether there is the second report occasion or the report quantity at the second report occasion, the first report occasion may have a relatively high priority and the second report occasion may have a relatively low priority.

For example, when it is assumed that Embodiment 2 described above is applied, a small priority index (e.g., 0) may be configured/defined for the second report occasion, and a large priority index (e.g., 1) may be configured/defined for the first report occasion.

For example, when it is assumed that Embodiment 3 described above is applied, a priority that is the same as or lower than PUCCH transmission including the existing CSI or PUSCH transmission including CSI may be configured/defined for the second report occasion, and a priority that is higher than PUCCH transmission including the existing CSI or PUSCH transmission including CSI may be configured/defined for the first report occasion.

### General Device to which the Present Disclosure may be applied

FIG. 17 illustrates a block diagram of a wireless communication system according to an embodiment of the present disclosure.

In reference to FIG. 17, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

### [Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method comprising:
receiving, by a user equipment (UE) from a network, a configuration related to a channel state information (CSI) report; and
transmitting, by the UE to the network, at least one uplink channel, based on a priority for a first uplink channel including a first UE-initiated (UEI) CSI report and a priority for at least one second uplink channel,
wherein the priority for the first uplink channel including the first UEI CSI report is based on at least one of event-related information, a priority index, or a power allocation order.

2. The method of Claim 1, wherein:
the at least one second uplink channel includes a second UEI CSI report, and
a first priority for the first UEI CSI report associated with a first type of an event, and a second priority for the second UEI CSI report associated with a second type of an event are different.

3. The method of Claim 2, wherein:
the first priority and the second priority are included in at least two priorities for at least two event types.

4. The method of Claim 1, wherein:
the at least one second uplink channel includes a second UEI CSI report, and
a first priority for the first UEI CSI report associated with an event at a first time point, and a second priority for the second UEI CSI report associated with an event at a second time point are different.

5. The method of Claim 1, wherein a priority index for the first uplink channel including the first UEI CSI report has a value of one of:
a larger first priority index;
a third priority index of a medium value between a value of the first priority index and a value of a smaller second priority index;
a fourth priority index larger than the value of the first priority index; or
a fifth priority index smaller than a value of the second priority index.

6. The method of Claim 5, wherein:
the value of the first priority index is 1,
the value of the second priority index is 0,
a value of the third priority index is 0.5,
a value of the fourth priority index is 2, and
a value of the fifth priority index is -1.

7. The method of Claim 1,
wherein, for uplink channel transmissions having a same priority index, a power allocation order for the first uplink channel transmission including the first UEI CSI report is:
equal to one of:
a first order of an uplink control channel transmission including at least one of hybrid automatic repeat request-acknowledgement (HARQ-ACK) information, a scheduling request (SR), or a link recovery request (LRR), or an uplink shared channel transmission including the HARQ-ACK information;
a second order of an uplink control channel transmission including CSI or an uplink shared channel transmission including the CSI; or
a third order of an uplink channel transmission not including the HARQ-ACK information or the CSI, and an uplink shared channel transmission on a primary cell in a 2-step random access procedure, or
different from the first order, the second order, and the third order.

8. The method of Claim 7, wherein the power allocation order for the first uplink channel transmission including the first UEI CSI report is one of:
an order equal to the first order, or an order before the first order;
an order after the first order and before the second order;
an order after the second order and before the third order; or
an order equal to the third order, or an order after the third order.

9. The method of Claim 1, wherein:
the UEI CSI report includes a UEI beam report, and
the beam report includes at least one of a layer 1-reference signal received power (L1-RSRP), a layer 1-signal to interference plus noise ratio (L1-SINR), a beam corresponding resource index.

10. The method of Claim 1, wherein:
the UEI CSI report includes at least one of a first report for a specific event occurrence, or a second report including a beam report.

11. The method of Claim 10, wherein:
a priority for the first report is equal to or different from a priority for the second report.

12. The method of Claim 11, wherein:
the priority for the first report is higher than the priority for the second report.

13. The method of Claim 1, wherein based on transmissions of a plurality of uplink channels including the first uplink channel and the at least one second uplink channel colliding:
an uplink channel transmission of a highest priority among the plurality of uplink channels is performed, and at least one remaining uplink channel transmission is dropped; or
at least one uplink channel transmission of a lower priority among the plurality of uplink channels is dropped, and at least one uplink channel transmission of a higher priority is multiplexed; or
power is applicated in descending order from a high priority to a low priority among the plurality of uplink channels.

14. A terminal, comprising:
at least one transceiver; and
at least one processor connected to the at least one transceiver,
wherein the at least one processor is configured to:
receive, through the at least one transceiver, from a network, a configuration related to a channel state information (CSI) report; and
transmit, through the at least one transceiver, to the network, at least one uplink channel based on a priority for a first uplink channel including a first UE-initiated (UEI) CSI report and a priority for at least one second uplink channel,
wherein the priority for the first uplink channel including the first UEI CSI report is based on at least one of event-related information, a priority index, or a power allocation order.

15. A method, comprising:
transmitting, to a UE by a base station, a configuration related to a channel state information (CSI) report; and
receiving, from the UE by the base station, at least one uplink channel based on a priority for a first uplink channel including a first UE-initiated (UEI) CSI report and a priority for at least one second uplink channel,
wherein the priority for the first uplink channel including the first UEI CSI report is based on at least one of event-related information, a priority index, or a power allocation order.

16. A base station, comprising:
at least one transceiver; and
at least one processor connected to the at least one transceiver,
wherein the at least one processor is configured to:
transmit, through the at least one transceiver, to a UE, a configuration related to a channel state information (CSI) report; and
receive, through the at least one transceiver, from the UE, at least one uplink channel based on a priority for a first uplink channel including a first UE-initiated (UEI) CSI report and a priority for at least one second uplink channel,
wherein the priority for the first uplink channel including the first UEI CSI report is based on at least one of event-related information, a priority index, or a power allocation order.

17. A processing device, comprising:
at least one processor; and
at least one computer memory operably connected to the at least one processor, and based on being executed by the at least one processor, storing instructions for performing a method according to any one of Claim 1 to Claim 13.

18. At least one non-transitory computer readable medium storing at least one instruction that controls to perform a method according to any one of Claim 1 to Claim 13 by being executed by at least one processor.
